# EUROPEAN PATENT APPLICATION

(11) **EP 1 806 877 A1**
(43) Date of publication of application: **11.07.2007**
(21) Application number: 05795248.3
(22) Date of filing: 19.10.2005
(51) Int. Cl.: H04L 12/56, G06F 13/00, H04L 1/00, H04L 29/02

(54) **TRANSMITTING DEVICE, RECEIVING DEVICE, AND FILE FORWARDING SYSTEM**

(30) Priority: 26.10.2004 JP 2004310316
(71) Applicant: MATSUSHITA ELECTRIC INDUSTRIAL CO., LTD., Osaka 571-8501 (JP)
(72) Inventor: KOSHINO, Toshiharu Matsushita Electric Industrial Co.Ltd, Chuo-ku, Osaka-shi, Osaka 540-6319 (JP); TAKECHI, Hideaki Matsushita Electric Industrial Co.Ltd, Chuo-ku, Osaka-shi, Osaka 540-6319 (JP); TANABE, Takumi Matsushita Electric Industrial Co.Ltd, Chuo-ku, Osaka-shi, Osaka 540-6319 (JP); SUZUKI, Yousuke Matsushita Electric Industrial Co.Ltd, Chuo-ku, Osaka-shi, Osaka 540-6319 (JP); KATO, Naonori Matsushita Electric Industrial Co.Ltd, Chuo-ku, Osaka-shi, Osaka 540-6319 (JP)
(74) Representative: Pautex Schneider, Nicole Véronique
(86) International application number: PCT/JP2005/019189
(87) International publication number: WO 2006/046446

(57) **Abstract**

The present invention provides a transmitting apparatus, a receiving apparatus, and a file transfer system, by which processing of transferring a file is efficiently executed, even if the file transfer is temporarily stopped for a long time in the file transfer system in which the transmitting apparatus voluntarily transmits the file to the receiving apparatus. In the file transfer system of the present invention, a sink apparatus, which is the receiving apparatus, receives file data included in a file from a source apparatus, which is the transmitting apparatus, and then stores the received file data. When a size of the stored data is inquired from the source apparatus, the sink apparatus informs the size to the source apparatus. Further, the source apparatus detects stopping of the file transfer. After the detecting of the stopping of the file transfer, the source apparatus inquires the size of stored data to the sink apparatus. Still further, the source apparatus transmits file data remaining in the file, based on the size notified by the sink apparatus in response to the inquiry.

## Description

### Technical Field

The present invention relates to a transmitting apparatus, a receiving apparatus, and a file transfer system, by which a file is transferred via a network.

### Background Art

In recent years, as broadband environments, such as xDigital Subscriber Line (xDSL) and fiber optics, have been developed, Internet connections have rapidly become popular both in businesses and at home. Home network environments, in which personal computers (PCs) and home appliances are connected via Ethernet^{™} or a wireless Local Area Network (LAN), have also been widely used. Under such circumstances, not only PCs but also home appliances, such as television sets, DVD recorders, air conditioners, and refrigerators, have been capable of being connected with one another under Internet Protocol (IP) standardized by Internet Engineering Task Force (IETF).

As one type of application program for the Internet, a home network, and the like, there are application programs by which files are transferred between PCs and home appliances. One example of such an application program for transferring files is an application program which provides a copy function for transferring recorded TV programs from a DVD recorder to a PC in order to edit the programs, transferring recorded MPEG-2 files between DVD recorders.

In general, in protocol for such file transfer, while real-time transfer is not always demanded, file transfer without errors is requested. A typical internet protocol (IP) for the file transfer is Hyper Text Transfer Protocol (HTTP) defined by RFC2616, File Transfer Protocol (FTP) defined by RFC959, or the like. In all of the protocols, reliability of transferring is ensured using a retransmission function of Transmission Control Protocol (TCP) defined by RFC793.

In more detail, the TCP defines retransmission procedures in which errors in a packet are detected, and retransmission procedures in which missing packets are detected, so that correct file transfer is ensured even if errors or packet missing occur on the transmission path. The retransmission procedures of the TCP, however, have limitations. The retransmission procedures have problems that, in the case of long temporal stopping of transfer due to troubles of a transmission path, reasons of a transmitting apparatus (hereinafter, referred to as a "source apparatus") or a receiving apparatus (hereinafter, referred to as a "sink apparatus"), or the like, the TCP connection is disconnected because of time-out, and the file transfer does not continue after the disconnection. Here, the reasons of the apparatuses are not only the troubles, but also the case where the file transfer needs to be temporarily stopped in order to execute another function of the apparatus. An example of such case is a situation where file transfer is temporarily stopped when a DVD recorder executes timer recording.

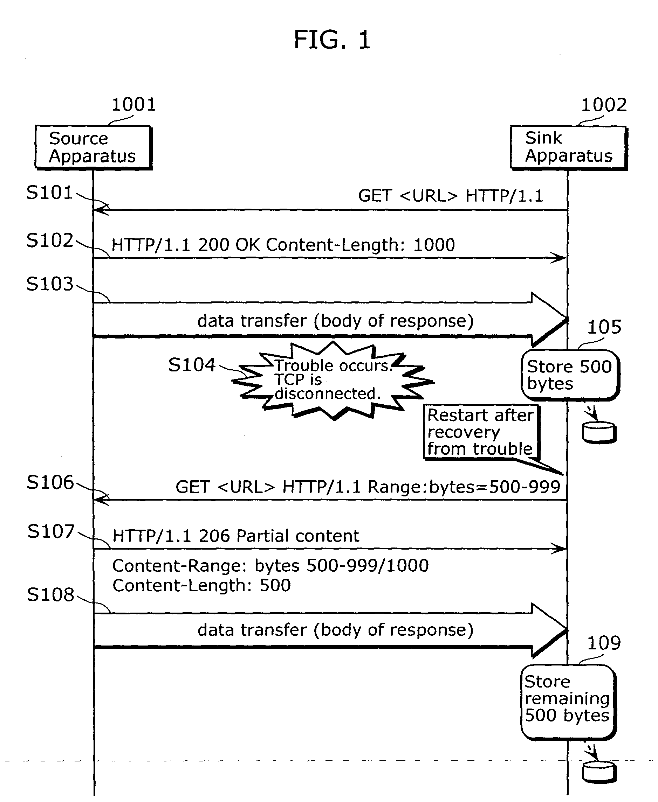

The HTTP defines procedures for solving the above problems, by defining a sequence in which such file transfer is able to be restarted immediately after the position of data which has been transferred prior to the stopping, using the TCP connection again, even if the transfer stop is arbitrary long time period. This sequence is explained with reference to FIG. 1.

FIG. 1 is a diagram showing one example of the communication sequence related to restarting of file transfer in the conventional file transfer system which includes the source apparatus and the sink apparatus.

The communication sequence shown in FIG. 1 is a communication sequence in a file transfer system, in which a file is transferred from the source apparatus 1001 to the sink apparatus 1002. Here, it is assumed that the TCP connection is stopped in the middle of the file transfer.

Firstly, the sink apparatus 1002 issues a HTTP GET request to the source apparatus 1001 (S101). In response to the request, the source apparatus 1001 sends "200 OK" (S102), and then transmits a file of 1000 bytes (S103). After that, communication trouble occurs and the TCP connection is stopped (S104).

Here, it is assumed that the sink apparatus 1002 has already stored data of 500 bytes, by the occurrence of the TCP connection stop (S105). The sink apparatus 1002 waits for recovery from the communication trouble, and at an arbitrary timing performs TCP reconnection in order to restart the transfer. The transfer is restarted, when the sink apparatus 1002 sends a HTTP GET request added with a Range header to the source apparatus 1001 (S106) in order to request data of and after 500th byte from the beginning of the transferring file.

The source apparatus 1001 transmits the data according to the Range (here, 500th to 999th bytes) designated by the sink apparatus 1002 (S107, S108), and the sink apparatus 1002 receives and stores the received data (S109). Thereby, it is possible to obtain only data which has not yet transferred, by restarting the transfer, without retransmitting data which has already been transferred. The above-explained procedures are used, for example, in application programs, by which a file is obtained efficiently by obtaining data from the position after already-obtained data, in the case of failing to download a large file more than several mega bytes on a server on the Internet.

A technology of providing data using the GET method of the HTTP is also disclosed (patent reference 1, for example).
[Patent Reference 1] Japanese Patent Application Publication No. 2002-288162

### Disclosure of Invention

### Problems that Invention is to Solve

Unlike in the GET method of the HTTP, however, there is a problem that the above conventional HTTP procedures of stopping and restarting the file transfer is not able to be used in a POST method. When a file is downloaded from a server on the Internet to a PC, the above restriction does not matter since the GET method of the HTTP can be used in such a situation.

However, if it is necessary to transfer a file between arbitrary apparatuses which are connected on a network, the HTTP POST method is usually used when the source apparatus attempts to transmit an arbitrary file to the sink apparatus, voluntarily without a request from the sink apparatus. This causes a problem that, when the communication between the source apparatus and the sink apparatus is temporarily stopped, the file needs to be transferred again from the beginning after recovery of the communication, so that resources and time are wasted for the file transfer.

This problem is explained in a more general way as follows. In a file transfer protocol, in which push-type flow control is executed triggered by voluntary transmission from the source, there is no efficient file transfer procedures to address the situation of communication stopping. Such a problem does not exist in the pull-type flow control in which the sink apparatus issues a request.

Moreover, even in the above-described procedures of stopping and restarting the file transfer using the HTTP GET method, a time period after which the connection become possible is not defined. Therefore, the procedures can be suitable when a file is available for a long time on a server and a great number of unknown PCs download the file from the server. However, when a file is transferred between arbitrary apparatuses connected via a network, it is not sure until when the source apparatus and the sink apparatus should be wait in a communication restart-able status. As a result, resources of the source apparatus and the sink apparatus are wasted.

In a view of the above problems, an object of the present invention is to provide the transmitting apparatus, the receiving apparatus, and the file transfer system, by which processing of transferring a file is efficiently executed, even if the file transfer is temporarily stopped for a long time in the file transfer system in which the transmitting apparatus voluntarily transmits the file to the receiving apparatus.

### Means to Solve the Problems

In order to achieve the above object, a file transfer system of the present invention performs file transfer to transfer a file from a transmitting apparatus to a receiving apparatus via a network, the transmitting apparatus transmitting the file and the receiving apparatus receiving the file. The file transfer system includes the receiving apparatus having: a storage unit in which file data included in the file is stored, the file data being received from the transmitting apparatus; a stored-size obtainment unit operable to obtain a stored size that is a size of the file data stored in the storage unit; and a receiving control unit operable to inform the stored size obtained by the stored-size obtainment unit to the transmitting apparatus, in response to inquiry of the transmitting apparatus about the stored size, and the transmitting apparatus having: a transmission unit operable to transmit the file data to the receiving apparatus; a detection unit operable to detect stopping of the file transfer; an inquiry unit operable to inquiry the stored-data size to the receiving apparatus, after the stopping of the file transfer is detected by the detection unit; and a transmission control unit operable to control the transmission unit to transmit file data remaining in the file, based on the stored-data size notified by the receiving apparatus in response to the inquiry of the inquiry unit.

Further, a transmitting apparatus of the present invention performs file transfer to transfer a file to a receiving apparatus via a network. The transmitting apparatus includes: a transmission unit operable to transmit file data included in the file to the receiving apparatus; a detection unit operable to detect stopping of the file transfer; an inquiry unit operable to inquiry a stored-data size to the receiving apparatus, after the stopping of the file transfer is detected by the detection unit, the stored-data size being a size of the file data stored in the receiving apparatus; and a transmission control unit operable to control the transmission unit to transmit file data remaining in the file, based on the stored-data size notified by the receiving apparatus in response to the inquiry of the inquiry unit.

Furthermore, a receiving apparatus of the present invention receives a file transmitted from a transmitting apparatus via a network. The receiving apparatus includes: a storage unit in which file data included in the file is stored, the file data being received from the transmitting apparatus; a stored-size obtainment unit operable to obtain a stored size that is a size of the file data stored in the storage unit; and a receiving control unit operable to inform the stored size obtained by the stored-size obtainment unit to the transmitting apparatus, in response to inquiry of the transmitting apparatus about the stored size.

Thereby, according to the present invention, the transmitting apparatus can inquire the receiving apparatus about a size of data stored in the receiving apparatus, after stopping of the file transfer. In addition, in response to the inquiry, the receiving apparatus can transmit information of the stored size to the transmitting apparatus. By being notified of the stored size, the transmitting apparatus can transmit only remaining file data to be transmitted to the receiving apparatus.

In other words, when the stopped file transfer is restarted, the transmitting apparatus transfers the remaining file data which the receiving apparatus is required, without transmitting the entire file data from the beginning. Furthermore, the receiving apparatus does not receive redundant overlapping file data. Thereby, in the processing related to the file transfer performed by the transmitting apparatus and the receiving apparatus, even if long communication stop occurs, processing nor resources are not wasted, so that the file transfer processing is executed efficiently.

Further, in the file transfer system according to the present invention, said receiving control unit may be further operable to transmit a stop request to said transmitting apparatus, the stop request requesting to stop the file transfer, and the stop request may include start timing information indicating a start timing at which said receiving apparatus restarts the file transfer, and end timing information indicating an end timing until which said receiving apparatus accepts the file transfer, said detection unit may be operable to detect the stopping of the file transfer, by receiving the stop request, and said transmission control unit may be operable to control said transmission unit to transmit the remaining file data from the start timing until the permission time period. Furthermore, said transmission control unit may be further operable to notify said receiving apparatus of a holding time period, before said transmission unit transmits the file data, the holding time period being a time period during which said receiving apparatus will hold the file data, and said receiving control unit may be further operable to delete the file data stored in said storage unit, if the file data is stored in said storage unit and all of the file data included in the file has not yet been received from said transmitting apparatus in expiration of the holding time period of the file data.

Thus, the transmitting apparatus and the receiving apparatus can exchange information regarding a time period regarding the file transfer. Thereby, when the file transfer is stopped due to the partner apparatus, each of the transmitting apparatus and the receiving apparatus does not need to wait for the restarting of the file transfer for an unlimited period, so that resources of each apparatus are not wasted. In short, the processing of the file transfer is able to be executed efficiently.

It should be noted that the present invention may be realized as: a method having steps performed by characteristic units in the file transfer system, the transmitting apparatus, or the receiving apparatus of the present invention; a program for executing these steps; a recording medium, such as a CD-ROM, in which the program is stored; and an integrated circuit. The program may be distributed via a transmitting medium, such as a communication network.

### Effects of the Invention

The present invention can provide a transmitting apparatus, a receiving apparatus, and a file transfer system, by which processing of transferring a file is efficiently executed, even if the file transfer is temporarily stopped for a long time in the file transfer system in which the transmitting apparatus voluntarily transmits the file to the receiving apparatus.

For example, in the file transfer system having: a source apparatus which transmits a file using the HTTP POST method; and a sink apparatus which receives the file from the source apparatus, the transmitting apparatus is notified of a size of data stored in the receiving apparatus, even after temporal stop occurs in the middle of the file transfer and the TCP connection is time out. Thereby, to the receiving apparatus, the transmitting apparatus can transfer remaining data which follows the data stored in the receiving apparatus.

This means that, when a certain file is transferred, the transmitting apparatus does not need to perform extra overlapping data transmission, while the receiving apparatus does not need to receive such unnecessary data.

As a result, in the file transfer protocol in which push-type flow control is executed triggered by the transmission from the source, it is possible to efficiently execute the processing of the file transfer, without wasting resources and time.

In addition, the present invention can provide a method and a means, each of which can handshake a time period regarding when restarting is possible in the stopping and the restarting procedure, so that it is defined until when the source apparatus and the sink apparatus needs to maintain a status where the restarting is possible. Thereby, it is possible to prevent wasting the resources, such as a memory and a medium, in the source apparatus and the sink apparatus in the file transfer. As a result, the processing of the file transfer is able to be executed efficiently.

### Brief Description of Drawings

[FIG. 1] FIG. 1 is a diagram showing one example of the communication sequence related to restarting of file transfer in the conventional file transfer system which includes the source apparatus and the sink apparatus.
[FIG. 2] FIG. 2 is a diagram showing an apparatus configuration of a file transfer system according to an embodiment of the present invention.
[FIG. 3] FIG. 3 is a functional block diagram showing a functional structure of a source apparatus according to the embodiment of the present invention.
[FIG. 4] FIG. 4 is a functional block diagram showing a functional structure of a sink apparatus according to the embodiment of the present invention.
[FIG. 5] FIG. 5 is a diagram showing a basic communication sequence of the file transfer system according to the embodiment of the present invention.
[FIG. 6] FIG. 6 is a table showing details of respective parameters sent from the source apparatus to the sink apparatus.
[FIG. 7] FIG. 7 is a diagram of one example of a communication sequence in which file transfer is temporarily stopped due to reasons of the source apparatus in the file transfer system according to the embodiment.
[FIG. 8] FIG. 8 is a diagram of one example of a communication sequence in which file transfer is temporarily stopped due to reasons of the sink apparatus in the file transfer system according to the embodiment.
[FIG. 9] FIG. 9 is a diagram of another example of the communication sequence in which the file transfer is temporarily stopped due to reasons of the sink apparatus in the file transfer system according to the embodiment.
[FIG. 10] FIG. 10 is a diagram showing a communication sequence in which the file transfer is restarted in the file transfer system according to the embodiment.
[FIG. 11] FIG. 11 is a diagram of one example of a communication sequence in which file transfer is cancelled prior to start of transmitting file data, due to reasons of the source apparatus, in the file transfer system according to the embodiment.
[FIG. 12] FIG. 12 is a diagram of one example of a communication sequence in which file transfer is cancelled in the middle of the transmitting file data, due to reasons of the source apparatus, in the file transfer system a according to the embodiment.
[FIG. 13] FIG. 13 is a diagram of one example of a communication sequence in which file transfer is cancelled prior to start of transmitting file data, due to reasons of the sink apparatus, in the file transfer system according to the embodiment.
[FIG. 14] FIG. 14 is a diagram of one example of a communication sequence in which file transfer is cancelled in the middle of the transmitting file data, due to reasons of the sink apparatus, in the file transfer system according to the embodiment.
[FIG. 15] FIG. 15 is a diagram showing a communication sequence of the file transfer system in which the source apparatus divides a file to be transferred to the sink apparatus.
[FIG. 16] FIG. 16 is a diagram showing a communication sequence in which file transfer is temporarily stopped prior to prior to transmission of one of the divided file data, due to reasons of the source apparatus, in the file transfer system in which the file is divided to be transferred.
[FIG. 17] FIG. 17 is a diagram showing a communication sequence in which file transfer is temporarily stopped when the sink apparatus receives a POST request, due to reasons of the sink apparatus, in the file transfer system in which the file is divided to be transferred.
[FIG. 18] FIG. 18 is a diagram showing a communication sequence in which file transfer is cancelled due to reasons of the sink apparatus, in the file transfer system in which the file is divided to be transferred.

### Numerical References

- 101: source apparatus
- 102: sink apparatus
- 701: user interface
- 702: file transmission control unit
- 703, 802: file control unit
- 704, 803: communication control unit
- 705, 804: file accumulation unit
- 706, 805: network interface
- 707: stop detection unit
- 708: inquiry unit
- 801: file-receiving control unit
- 806: stored-size obtainment unit

### Best Mode for Carrying Out the Invention

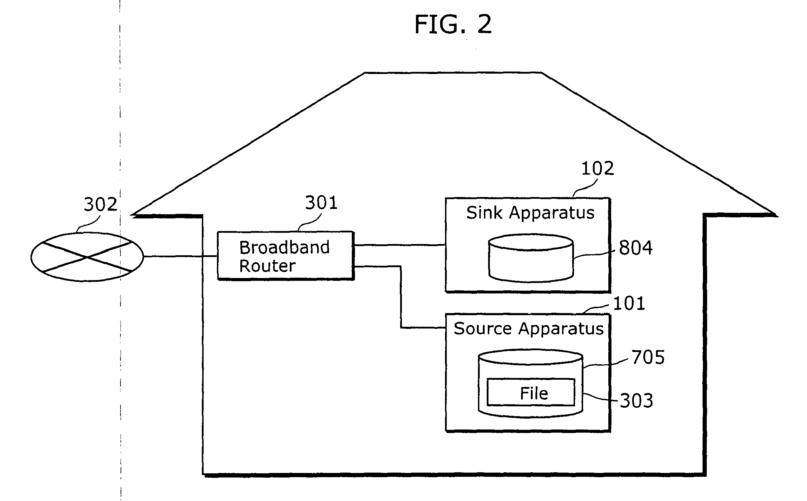

The following describes the most preferable embodiment for carrying out the present invention with reference to the drawings.
Firstly, referring to FIGS. 2 to 4, the configuration of the file transfer system according to the embodiment of the present invention is described.

FIG. 2 is a diagram showing an apparatus configuration of the file transfer system according to the embodiment of the present invention. The file transfer system according to the embodiment of the present invention is a system for transferring a file from a source apparatus 101 to a sink apparatus 102.

As shown in FIG. 2, the source apparatus 101 and the sink apparatus 102 are connected to a broadband router 301, all of which configure a home network. The broadband router 301 may be further connected to the Internet 302.

Each of the source apparatus 101 and the sink apparatus 102 has an embedded accumulation medium, in which files, such as audio visual (AV) contents, are able to be accumulated. In more detail, the source apparatus 101 has a file accumulation unit 705, while the sink apparatus 102 has a file accumulation unit 804.

Examples of such an apparatus are a DVD/HDD hybrid recorder with a network-connecting terminal, and the like. As the initial condition of the embodiment, the source apparatus 101 accumulates a file 303 in the file accumulation unit 705, and then transfers the file to the sink apparatus 102 via the home network. The sink apparatus 102 receives the file 303 from the source apparatus, and accumulates the file in the file accumulation unit 804.

It is assumed that, in the embodiment, each of the sink apparatus 102 and the source apparatus 101 conforms to the UPnP-AV standard defined by the Universal Plug and Play Forum (UPnP), that the sink apparatus 102 has a Contents Directory Service (CDS) server function, and that the source apparatus 101 has the Control Point function for accessing the CDS server.

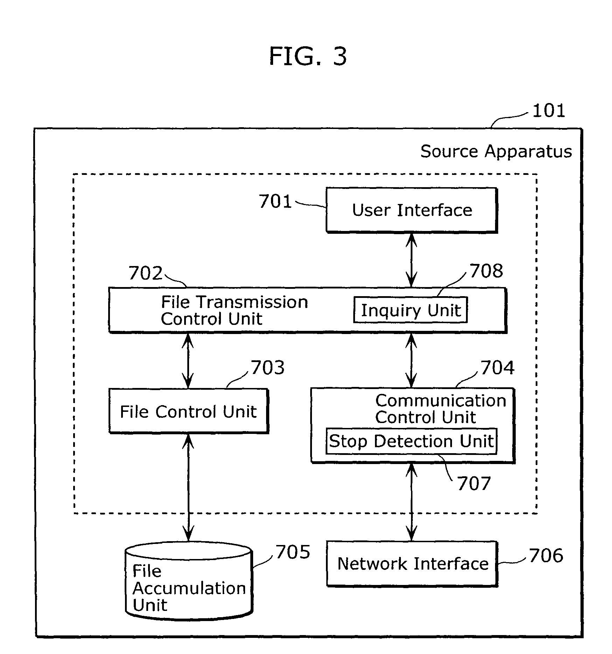

FIG. 3 is a functional block diagram showing a functional structure of the source apparatus 101 according to the embodiment of the present invention. The source apparatus 101 is one example of the transmitting apparatus according to the present invention. It should be noted that the units which the source apparatus 101 originally has, such as the Control Point function, are not shown nor explained herein, but only units characterized in the source apparatus 101 are shown and explained.

As shown in FIG. 3, the source apparatus 101 includes a user interface 701, a file transmission control unit 702, a file control unit 703, a communication control unit 704, a file accumulation unit 705, and a network interface 706. The units in the area enclosed by a dashed line are units which perform main processing of file transfer.

The user interface 701 is an interface which receives an input, such as an instruction, from a user, and provides the user with information as video and the like. The network interface 706 is another interface which exchanges information with the sink apparatus 102 via the home network.

The file accumulation unit 705 is a recording medium in which files, such as AV contents, are accumulated, as described above.

The file transmission control unit 702 is a control unit which controls transmission of files to the sink apparatus 102. The file transmission control unit 702 has an inquiry unit 708. The inquiry unit 708 is a processing unit which inquires the sink apparatus 102 about a size of data stored in the sink apparatus 102, when stopped file transfer is restarted.

It should be noted that the above-mentioned size of stored data means an amount of file data (hereinafter, referred to also simply as "data") included in a target file, and the file data has been received and stored by the sink apparatus 102 during the file transfer from the source apparatus 101 to the sink apparatus 102. More specifically, when a size of the file is 1000 bytes, the size of the stored data is represented by a value that ranges from 0 byte to 1000 bytes.

It should be also noted that the "stopping of the file transfer" means not only the situation where transmitting or receiving of file data is stopped after transmission of the file data is started, but also a situation where other processing required for the file transfer is stopped.

The file control unit 703 is a control unit which controls reading of files from the file accumulation unit 705.

The communication control unit 704 is another control unit which controls the network interface 706 so that communication via the home network is controlled. Combination of the communication control unit 704 and the network interface 706 forms a function of transmitting information. The function is realized by a transmission unit according to the present invention. The communication control unit 704 has a stop detection unit 707. The stop detection unit 707 is a processing unit which detects stopping of the file transfer.

The source apparatus 101 controls the user interface 701 to display a list of the files accumulated in the file accumulation unit 705. A file which the user selects from the list is read from the file accumulation unit 705, and transmitted to the sink apparatus 102 by controlling the network interface 706.

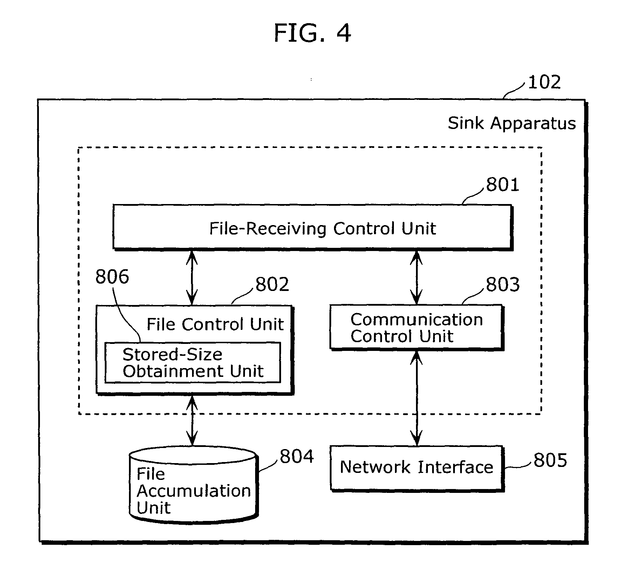

FIG. 4 is a functional block diagram showing a functional structure of the sink apparatus 102 according to the embodiment of the present invention. The sink apparatus 102 is one example of the receiving apparatus according to the present invention. It should be noted that the units which the sink apparatus 102 originally has, such as the CD server function, are not shown nor explained herein, but only units characterized in the sink apparatus 102 are shown and explained.

As shown in FIG. 4, the sink apparatus 102 has a file-receiving control unit 801, a file control unit 802, a communication control unit 803, a file accumulation unit 804, and a network interface 805. The units in the area enclosed by a dashed line are units which perform main processing of file transfer.

The network interface 805 is an interface which exchanges information with the source apparatus 101 via the home network.

The file accumulation unit 804, which is one example of a storage unit of the receiving apparatus according to the present invention, is a recording device in which files received from the source apparatus 101 are accumulated.

The file-receiving control unit 801 is a control unit which controls receiving of files transmitted from the source apparatus 101.

The file control unit 802 is a control unit which controls reading of files from the file accumulation unit 804. The file control unit 802 has a stored-size obtainment unit 806. The stored-size obtainment unit 806 is a processing unit which obtains a size of stored data from the file accumulation unit 804. The obtained stored-data size is informed to the source apparatus 101 under the control of the file-receiving control unit 801.

The communication control unit 803 is another control unit which controls the network interface 805 so that communication via the home network is controlled.

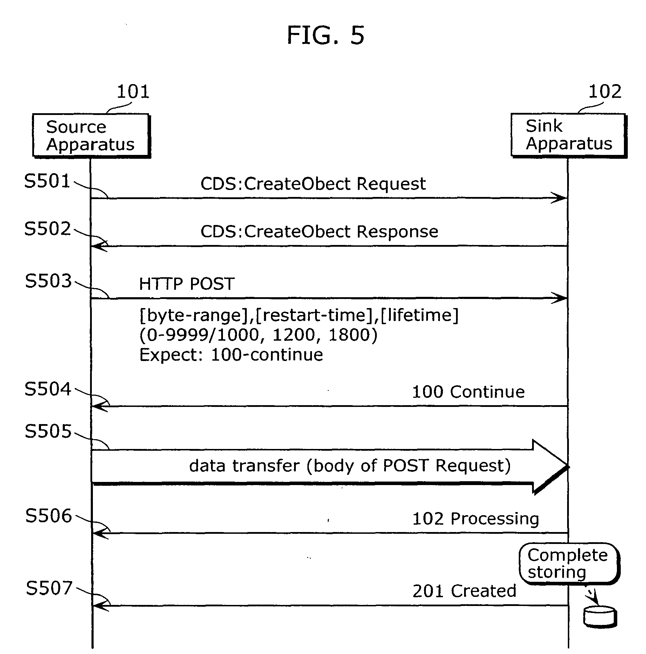

The following describes operations performed by the source apparatus 101 and the sink apparatus 102 in the file transfer system having the above-structured the source apparatus 101 and sink apparatus 102, with reference to FIGS. 5 to 14.

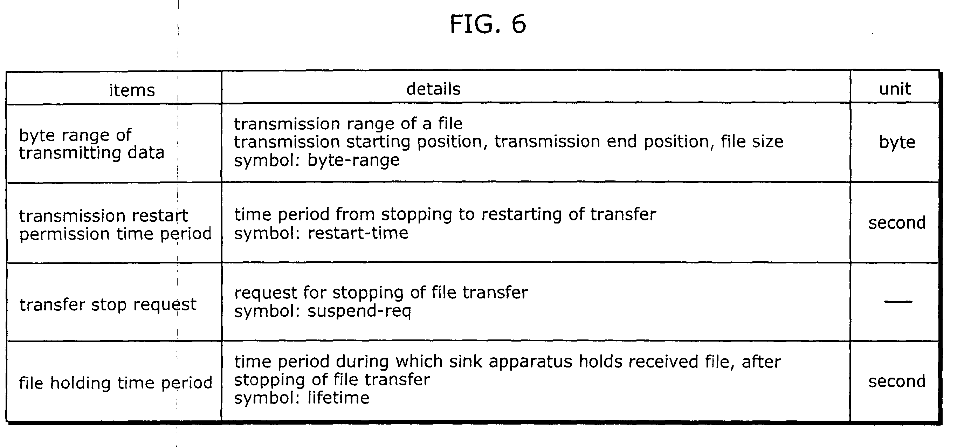

Firstly, referring to FIGS. 5 and 6, operations performed by each of the apparatuses in a basic communication sequence are described.

FIG. 5 is a diagram showing a basic communication sequence of the file transfer system according to the embodiment of the present invention. As shown in FIG. 5, in the embodiment, file transfer is started by communication from the source apparatus 101 to the sink apparatus 102. In other words, FIG. 5 is a communication sequence diagram in which the source apparatus 101 voluntary transfers a file.

Here, the communication between the source apparatus 101 and the sink apparatus 102 is relayed by the broadband router 301. However, the operations of the broadband router 301 are not related to the characteristics of the present invention, so that the broadband router 301 is not shown in the drawings, and the operations are not described herein.

The source apparatus 101 sends a CDS:CreateObject request defined by the UPnP-AV standard (S501). Here, the CreateObject request is a request for creation of an object. The object represents a logical file. According to this CreateObject request, a new object is created in the file accumulation unit 804 of the sink apparatus 102. At this timing, a position of the created object in a directory structure, meta data such as a file name indicating the object, and the like are decided. This meta data includes an Uniform Resource Identifier (URI) on the sink apparatus 102, and substance of the file is to be stored in the location identified by the URI. To the source apparatus, the sink apparatus 102 sends a CDS:CreateObject response including the URI as a destination address of the file (S502).

The source apparatus 101 sends a HTTP request of the POST method (hereinafter, referred to as a "POST request") to the sink apparatus 102 (S503). At this timing, as parameters to be referred by the sink apparatus 102 in the case of stopping of the file transfer, the source apparatus 101 sends parameters shown in FIG. 6 in addition to the POST request. In more detail, as the parameters, [byte-range], [restart-time], and [lifetime] are send.

FIG. 6 is a table showing details of respective parameters sent from the source apparatus 101 to the sink apparatus 102.

As shown in FIG. 6, [byte-range] is a byte range of data to be transmitted. The byte range is information indicating a starting position and an end position of a data range of file data to be transmitted, and also information indicating a file size that is a total size of the file data. The unit of the byte range is byte.

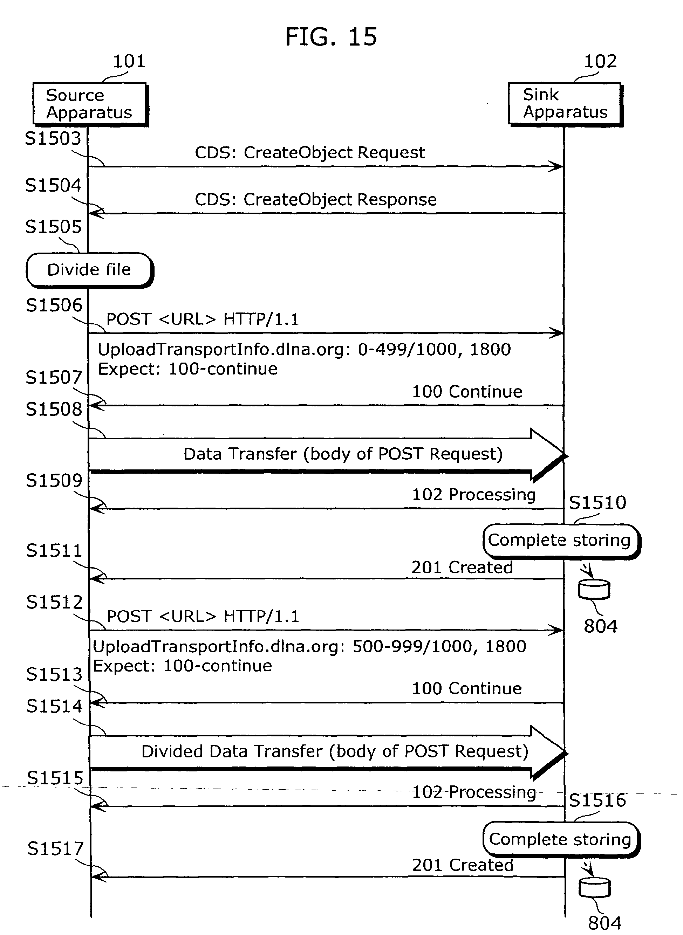

This means that the sink apparatus 102 is notified of not only a data range but also a total file size regarding the data which will be transmitted from the source apparatus. Therefore, it is possible to determine whether the received file data is a part of a certain file, or entire data of the file. It should be noted that, in the embodiment, when a single file is transmitted to the sink apparatus 102, the entire file is transmitted without being divided. Another case where one file is divided to be transmitted will be described further below with reference to FIG. 15.

[restart-time] represents a transmission restart permission time period. The transmission restart permission time period is information indicating a time period during which transmission is temporarily stopped and after which the file transfer is restarted. The unit of the transmission restart permission time period is second.

[lifetime] represents a file holding time period. The file holding time period is information indicating a time period during which the sink apparatus 102 needs to hold the object or the received file data. The unit of the file holding time period is second. In the case where the file data has not been received by expiration of the period represented by the [lifetime], the sink apparatus 102 does not need to hold the created object. Further, in the case where the [lifetime] is notified, a part of the file data is received, but the entire file data has not yet been received, or in the case where the remaining file data has not yet been received by the expiration of the period represented by the [lifetime], the sink apparatus 102 does not need to hold the not-complete file data any longer.

Thereby, even if the connection of the source apparatus 101 is impossible, or even if the file to be transferred is missed, the sink apparatus 102 does not need to hold extra resources for the file transfer that is not able to be completed. Thereby, in the sink apparatus 102 the resources can be managed efficiently, so that maintenance, such as deletion of unnecessary objects by the user, is not necessary.

In the communication sequence of FIG. 5, the source apparatus 101 designates: a starting position of data to be transmitted as the 0th byte; an ending position of the data as the 999th byte; and a file size as 1000 bytes. This means that a single file is transmitted as one data as described above. The source apparatus 101 further designates: a temporal stop time period as 1200 seconds (20 minutes); and a file holding time period as 1800 seconds (30 minutes).

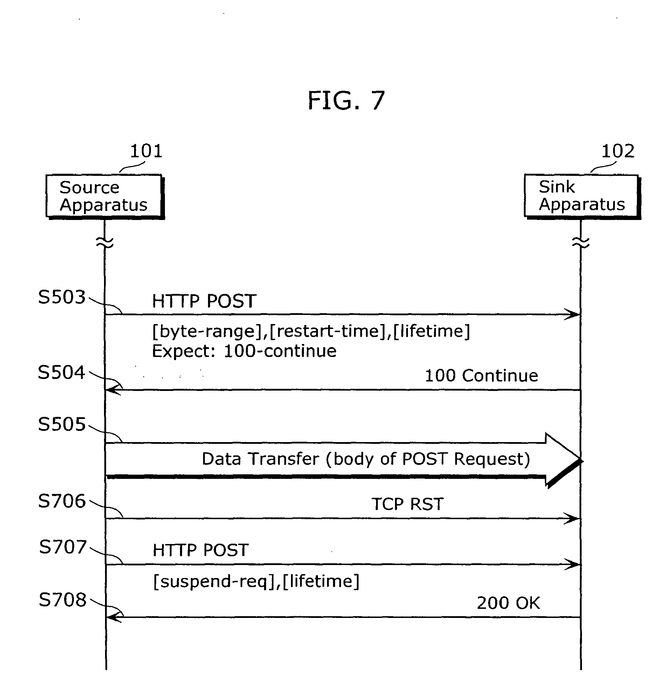

Here, [suspend-req] representing a transfer stop request is not used in the communication sequence of FIG. 5. The situation where [suspend-req] is sent to the sink apparatus 102 will be described further below with reference to FIG. 7.

Furthermore, as a URI designated by the POST request sent from the source apparatus 101 to the sink apparatus 102, the URI which has been included in the CreateObject response received from the sink apparatus 102 is described in the POST request. Thereby, the sink apparatus 102 can associate the received file data with a specific object.

Still further, the POST request is added with Expert: 100-continue. Thereby, according to the RFC2616, the sink apparatus checks whether or not the sent POST request is acceptable by the above URI.

As a result of the checking, if acceptable, then "100 Continue" is sent in response (S504). Here, if the POST request from the source apparatus 101 is not acceptable, or if the POST request is not able to be interpreted, then the sink apparatus 102 can notify such a situation to the source apparatus prior to starting of the data transfer. Eventually, the source apparatus 101 can prevent redundant extra data transmission.

When the source apparatus 101 receives the "100 Continue" status from the sink apparatus 102, the source apparatus 101 transmits the file to the sink apparatus 102 (S505). Here, data of the file is transmitted being stored in an entity body of a POST request.

The sink apparatus 102 receives the file and accumulates the file into the file accumulation unit 804. In the case where it takes a time to accumulate the file into the file accumulation unit 804 after receiving the file, for example where the accumulation is not completed within 20 minutes, then the sink apparatus 102 sends "102 Processing" defined by RFC2518 (S506) in order to notify the source apparatus 101 of that the sink apparatus 102 is on the accumulating process. When the accumulation is completed, then the sink apparatus 102 sends "201 Created" in order to notify the source apparatus 101 of the accumulation completion (S507).

By the above-described operations performed by the respective apparatuses, the file transfer from the source apparatus 101 to the sink apparatus 102 is completed.

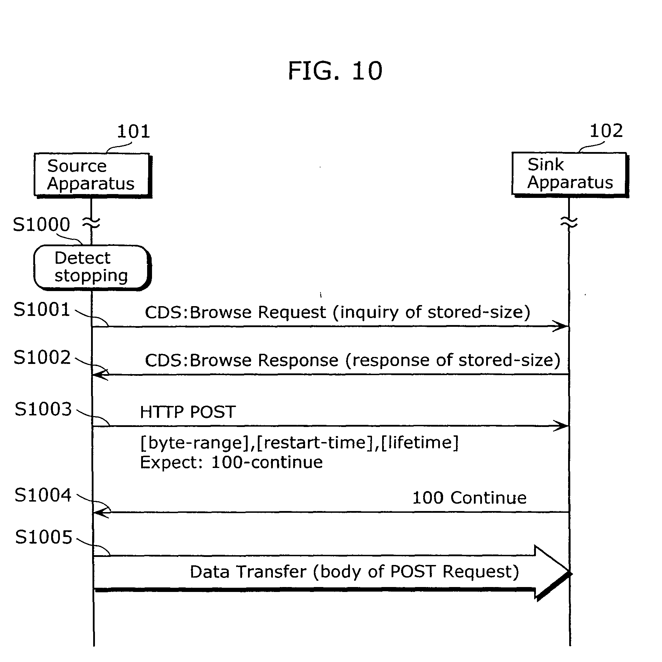

In the meanwhile, although the communication sequence shown in FIG. 5 is a basic communication sequence in which no stopping occurs in the middle of the file transfer, there is another case where the file transfer is temporarily stopped due to reasons of the source apparatus 101 or the sink apparatus 102. Therefore, the following describes communication sequences and operations of the respective apparatuses, in the case where such stopping occurs in the middle of the file transfer, with reference to FIGS. 7 to 9. In addition, a communication sequence and operations of the respective apparatuses, in which the file transfer is restarted, are described with reference to FIG. 10.

FIG. 7 is a diagram of one example of the communication sequence in which the file transfer is temporarily stopped due to reasons of the source apparatus 101 in the file transfer system according to the embodiment. Referring to FIG. 7, described are operations performed by the respective apparatuses in the case where file transfer is temporarily stopped in the middle of transmitting file data from the source apparatus 101 to the sink apparatus 102, due to reasons of the source apparatus 101.

Like the the communication sequence of FIG. 5, the source apparatus 101 and the sink apparatus 102 perform communication of CDS:CreateObject request and response. After that, the source apparatus 101 sends a POST request to the sink apparatus 102 (S503). In response to the POST request, the sink apparatus 102 sends a "100 Continue" status to the source apparatus 101 (S504).
The source apparatus 101 starts transmitting of file data to the sink apparatus 102 (S505). The sink apparatus 102 receives the file data and accumulates the file data into the file accumulation unit 804. The above operations are the same as shown in the communication sequence of FIG. 5.

Here, on the source apparatus 101 side, a cause of stopping of the file transfer occurs, so that a RST packet is sent to disconnect the TCP connection. Thereby, the TCP connection used in the file transfer is disconnected (S706).

An example of the factor of the file transfer stopping is that the transmitting file is deleted from the file accumulation unit 705 by a user's operation.

To the sink apparatus 102, the source apparatus 101 also sends a POST request packet including [suspend-req] and [lifetime] (S707). [suspend-req] is, as shown in FIG. 6, information representing a request for stopping of the file transfer. Thereby, by receiving the [suspend-req], the sink apparatus 102 is notified of that the file transfer is stopped. Here, as explained above, [lifetime] is also information representing a time period during which the sink apparatus 102 needs to hold the received file data. In this situation, the [lifetime] also means that the source apparatus 101 will restart the file transfer within the represented time period. After expiration of the file holding time period, the sink apparatus 102 can delete the received, stored file data.

Here, in the above-described processing related to the file transfer stopping, the RST packet and the POST request packet are created by the file transmission control unit 702 and sent to the sink apparatus 102. Hereinafter, the simply-called "POST request" means a POST request packet as substance.

Moreover, the stop detection unit 707 detects that the file transfer is stopped, by detecting the disconnection of the TCP connection.

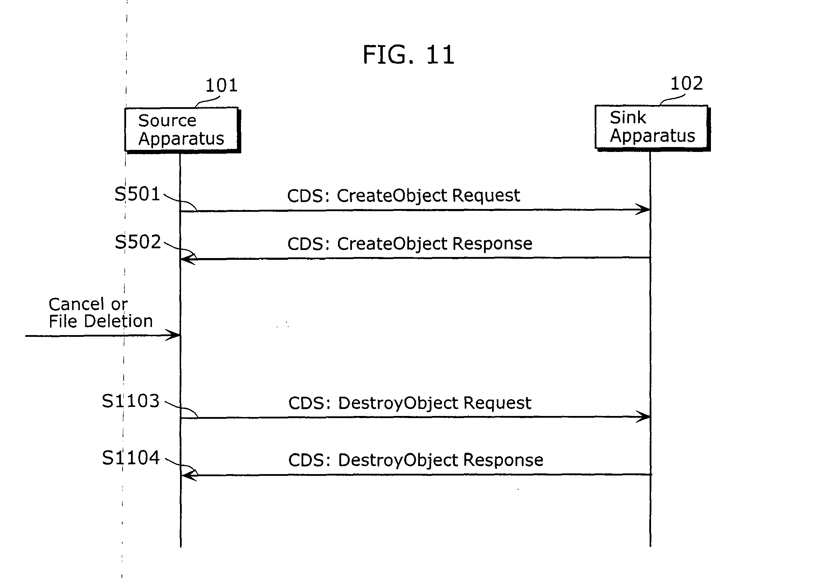

When the sink apparatus 102 receives the above POST request, the sink apparatus 102 sends "200 OK" in response (S708).
After disappearing the factor of the file transfer stopping, the source apparatus 101 performs processing for restarting the file transfer, which will be described further below with reference to FIG. 11.

Thus, in the file transfer system according to the embodiment, the file transfer is temporarily stopped due to the reasons of the source apparatus 101, during a period after starting the file data transmission and before completing the file transfer.

The following describes operations of the respective apparatuses, in the case where file transfer is temporarily stopped due to the reasons of the sink apparatus 102 when the sink apparatus 102 receives a POST request.

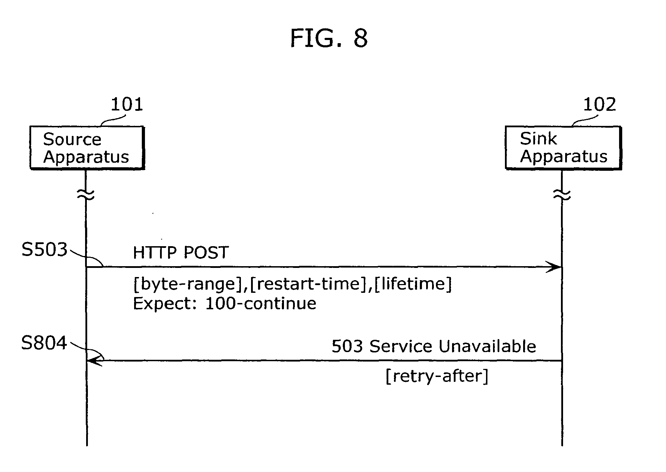

FIG. 8 is a diagram of one example of a communication sequence in which file transfer is temporarily stopped due to reasons of the sink apparatus 102 in the file transfer system according to the embodiment.

Like the communication sequence of FIG. 5, the source apparatus 101 and the sink apparatus 102 perform communication of CDS:CreateObject request and response. After that, the source apparatus 101 sends a POST request to the sink apparatus 102 (S503). The above operations are the same as shown in the communication sequence of FIG. 5.

At the moment, the sink apparatus 102 is in a status where file receiving processing is impossible, so that the sink apparatus 102 sends a "503 Service Unavailable" status in response to the POST request. An example of the status where file receiving processing is impossible is a status where the file accumulation unit 804 does not have enough available capacity.

The sink apparatus 102 responds by sending the status packet added with "retry-after" representing a beginning-timing time period after which the file transfer is to be restarted (S804). After expiration of the period represented by the "retry-after", the source apparatus 101 performs the processing for restarting the file transfer, which will be described further below with reference to FIG. 11.

Thus, in the file transfer system according to the embodiment, the file transfer is temporarily stopped due to the reasons of the sink apparatus 102, during a period: after notifying by the source apparatus 101 a size and the like regarding the file transferred by the POST request to the sink apparatus 102; and before starting transmitting the file data.

The following describes operations of the respective apparatuses, in the case where file transfer is temporarily stopped due to a cause of the sink apparatus 102 in the middle of transmitting file data from the source apparatus 101 to the sink apparatus 102.

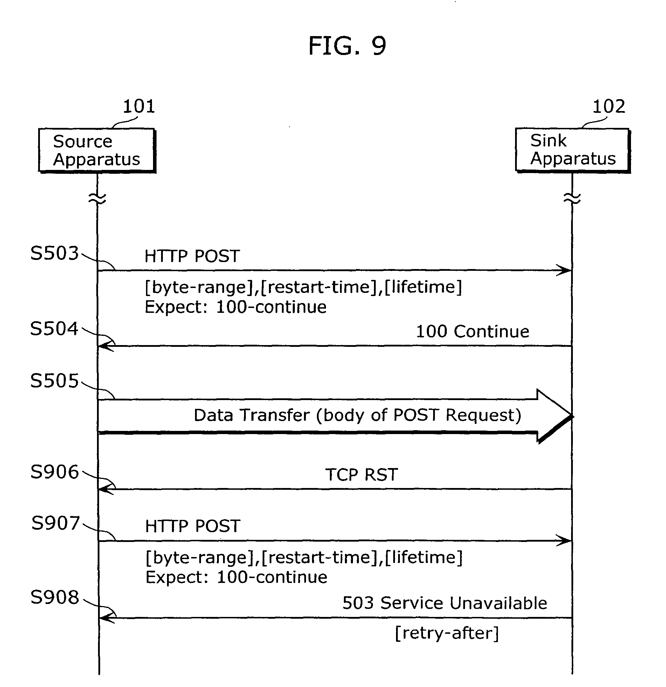

FIG. 9 is a diagram showing another example of a communication sequence in which file transfer is temporarily stopped due to reasons of the sink apparatus 102 in the file transfer system according to the embodiment.

Like the communication sequence of FIG. 5, the source apparatus 101 and the sink apparatus 102 perform communication of CDS:CreateObject request and response. After that, the source apparatus 101 sends a HTTP request of the POST method to the sink apparatus 102 (S503). In response to the HTTP request, the sink apparatus 102 sends a "100 Continue" status to the source apparatus 101 (S504). The source apparatus 101 starts transmitting of file data to the sink apparatus 102 (S505). The sink apparatus 102 receives the file data and accumulates the file data into the file accumulation unit 804. The above operations are the same as shown in the communication sequence of FIG. 5.

Here, on the sink apparatus 102 side, a cause of stopping of the file transfer occurs, so that a RST packet is sent. Thereby, the TCP connection used in the file transfer is disconnected (S906). An example of the cause of stopping of the file transfer is that it is necessary to read another file from the file accumulation unit 804 so that the received file data is not able to be accumulated.

When the TCP connection is disconnected by the sink apparatus, the file transmission control unit 702 of the source apparatus 101 sends a POST request again to the sink apparatus 102 (S907).

In request to the POST request, the sink apparatus 102 sends a "503 Service Unavailable" status to the source apparatus 101 (S908). The status packet includes the above-explained [retry-after].

The "503 Service Unavailable" added with this [retry-after] is a request from the sink apparatus 102 for stopping of the file transfer.

The stop detection unit 707 of the source apparatus 101 detects that the file transfer is stopped, by detecting the stopping request. After expiration of the period represented by the "retry-after", the source apparatus 101 performs the processing for the restarting the file transfer, which will be described further below with reference to FIG. 11.

Thus, in the file transfer system according to the embodiment, the file transfer is temporarily stopped due to the cause of the sink apparatus 102, during a period: after starting the file data transmission; and before completing the transmission.

The following describes operations of the respective apparatuses when the file transfer is restarted after the stopping of the file transfer which has been described with reference to FIGS. 7 to 9.

FIG. 10 is a diagram showing a communication sequence in which the file transfer is restarted in the file transfer system according to the embodiment.

The stop detection unit 707 of the source apparatus 101 detects that the file transfer is stopped (S1000). It should be noted that the stop detection unit 707 can detect the file transfer stopping, based on types, details, and the like of the sent and received packets, regardless of whether the file transfer stopping occurs due to reasons of the source apparatus 101 or reasons of the sink apparatus 102.

The source apparatus 101 performs following operations. If the file transfer stopping caused by reasons of the source apparatus 101, the operations are performed after disappearing the cause of the stopping. On the other hand, if the stopping caused by reasons of the sink apparatus 102, the operations are performed after expiration of the period represented by the [retry-after] sent form the sink apparatus 102 in the stopping.

The source apparatus 101 sends a CDS:Browse request to the sink apparatus 102 (S1002) in order to inquire the sink apparatus 102 about a size of the stored file.

In more detail, a request for notification of the stored-data size is added by the inquiry unit 708 into the CDS:Browse request created by the file transmission control unit 702 of the source apparatus 101. The CDS:Browse request is sent to the sink apparatus 102 via the network interface 706.

When the CDS: Browse request is received, the sink apparatus 102 sends a CDS: Browse response added with the stored-data size to the source apparatus 101 (S1002).

In more detail, the stored-size obtainment unit 806 obtains a data size of the file data which is a part of the file data of the file and is stored in the file accumulation unit 804. Further, the file-receiving control unit 801 creates the CDS:Browse response added with the data size obtained by the stored-size obtainment unit 806. The created CDS:Browse response is sent to the source apparatus 101 via the network interface 805.

The file transmission control unit 702 of the source apparatus 101 decides a starting position of the file to be transferred, according to the received stored-data size, and then reads the file data from the file accumulation unit 705.

Here, it is assumed, as one example, that the file size is 1000 bytes and that the stored-data size notified from the sink apparatus 102 is 400 bytes. In this situation, the file data stored in the sink apparatus 102 is file data ranging from the 0th byte to the 399 byte. Therefore, the file transmission control unit 702 reads remaining file data, which ranges from the 400th byte to the 999th byte, from the file accumulation unit 705 via the file control unit 703. Hereinafter, the "remaining file data" means remaining file data in which the file data stored in the sink apparatus 102 is excluded from the entire target file data.

The source apparatus 101 sends a POST request including [byte-range] representing the data rage and the file size, and the like, to the sink apparatus 102 (S1003). In response to the POST request, the sink apparatus 102 sends a "100 Continue" status to the source apparatus 101 (S1004).

The file transmission control unit 702 of the source apparatus 101 has the communication control unit 704 to transmit the remaining file data read from the file accumulation unit 705 (S1005).
Based on the data range represented by the [byte-range], the file control unit 802 of the sink apparatus 102 combines the received file data and the file data stored prior to the stopping, in order to restructure the original file.

Thus, the source apparatus 101 according to the embodiment of the present invention can inquire the sink apparatus 102 about the stored-data size, when the stopped file transfer is restarted. Moreover, in response to the inquiry, the sink apparatus 102 according to the embodiment of the present invention can notify the source apparatus 101 of the stored-data size.

Thereby, the source apparatus 101 does not need to perform the file transfer again from the beginning, but transmits the remaining file data only. Furthermore, the sink apparatus 102 does not receive overlapping file data.

More specifically, by the source apparatus 101, the sink apparatus 102, and the file transfer system according to the embodiment of the present invention, in the voluntary file transfer from the source apparatus 101, it is possible to efficiently perform processing related to file transfer even if stopping of the file transfer is longer than a defined time-out of the TCP connection.

In addition, it is possible, between the apparatuses, to notify a time when the transfer is able to be restarted, so that unnecessary operations of attempting to restart the transfer are prevented, which results in advantages of reducing communication loads on the apparatus.

It should be noted that, in the case where the communication path of the network is disconnected in the middle of the file transfer, the stop detection unit 707 of the source apparatus 101 detects the disconnection of the communication path, and thereby the operation of restarting the file transfer shown in the communication sequence of FIG. 10 begins.

It should be also noted that the above has described the communication sequences and the operations of the respective apparatuses in the case where the file transfer is stopped temporarily, with reference to FIGS. 7 to 9, but there is another case where the file transfer is not stopped temporarily but cancelled due to reasons of the source apparatus 101 or the sink apparatus 102. Each of the source apparatus 101 and the sink apparatus 102 according to the embodiment of the present invention can notify to the other apparatus of the cancel of the file transfer. The following describes communication sequences and operations related to the file transfer canceling, with reference to FIGS. 11 to 14.

FIG. 11 is a diagram showing one example of a communication sequence in which file transfer is cancelled prior to start of transmitting file data, due to reasons of the source apparatus 101, in the file transfer system according to the embodiment. Referring to FIG. 11, described are the operations performed by the respective apparatuses when file transfer execution is cancelled prior to start of the file transfer, due to reasons of the source apparatus 101.

Like the communication sequence of FIG. 5, the source apparatus 101 and the sink apparatus 102 perform communication of CDS:CreateObject request and response (S501 and S502). After that, prior to sending a POST request from the source apparatus 101, it is assumed that, on the source apparatus 101 side, a a user instructs to cancel the file transfer or deletes the file to be transferred.

In such a situation, in order to cancel the file transfer, the source apparatus 101 sends a CDS:DestroyObject request instead of a POST request, to the sink apparatus 102 (S1103). When the CDS:DestroyObject request is received, the sink apparatus 102 deletes the created object (S501) according to the CDS:DestroyObject request. Furthermore, in order to notify the deleting of the object, a CDS: DestroyObject response is sent to the source apparatus 101 (S1104).

Thus, in the case where the file transfer is cancelled prior to start of the file transfer due to reasons of the source apparatus 101, the sink apparatus 102 deletes the object created to store the file. In other words, the unnecessary object in the sink apparatus 102 is deleted immediately.

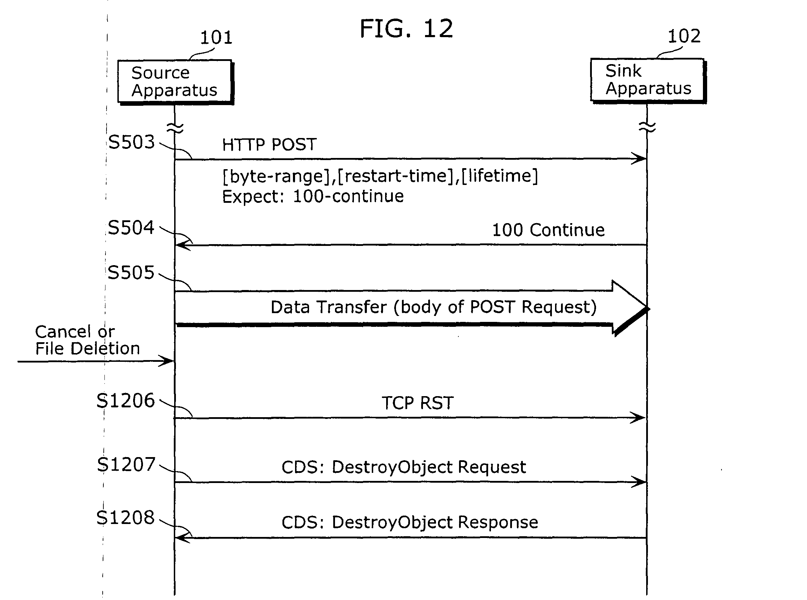

The following describes operations performed by the respective apparatuses in the case where file transfer is cancelled in the middle of transmitting file data from the source apparatus 101 to the sink apparatus 102, due to reasons of the source apparatus 101, with reference to FIG. 12.

FIG. 12 is a diagram showing one example of a communication sequence in which file transfer is cancelled prior to start of transmitting the file data, due to reasons of the source apparatus 101, in the file transfer system according to the embodiment.

Like the communication sequence of FIG. 5, the source apparatus 101 and the sink apparatus 102 perform communication of CDS:CreateObject request and response. After that, the source apparatus 101 sends a POST request to the sink apparatus 102 (S503). In response to the POST request, the sink apparatus 102 sends a "100 Continue" status to the source apparatus 101 (S504). The source apparatus 101 starts transmitting of file data to the sink apparatus 102 (S505). The sink apparatus 102 receives the file data and accumulates the file data into the file accumulation unit 804. The above operations are the same as shown in the communication sequence of FIG. 5.

Here, prior to sending a POST request from the source apparatus 101, it is assumed that, on the source apparatus 101 side, the user instructs to cancel the file transfer or deletes the file to be transferred.

In order to cancel the file transfer, the source apparatus 101 sends a RST packet of the TCP (S1206). Thereby, the TCP connection used in the file transfer is disconnected. In addition, the source apparatus 101 sends a CDS:DestroyObject request to the sink apparatus 102 (S1207). In response to the CDS:DestroyObject request, the sink apparatus 102 deletes the already received file data, and sends a CDS: DestroyObject response to the source apparatus 101 (S1208).

Thus, in the case where the file transfer is cancelled prior to start of transmission of the file data due to reasons of the source apparatus 101, the sink apparatus 102 deletes the received stored file data. In other words, the uncompleted file data which is no longer necessary in the sink apparatus 102 is deleted immediately.

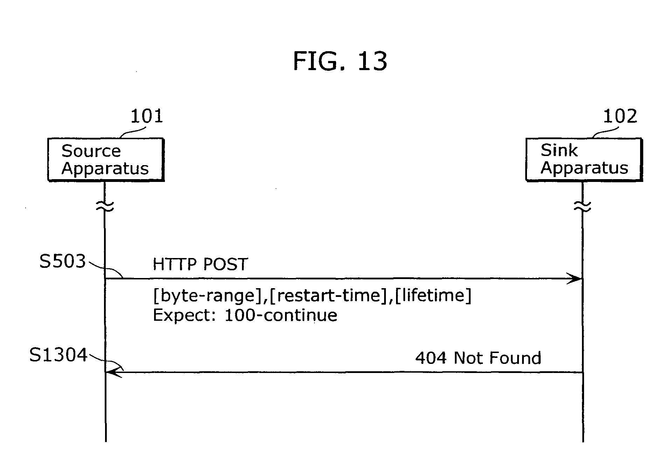

The following describes operations of the respective apparatuses, in the case where file transfer is cancelled due to the reasons of the sink apparatus 102 when the sink apparatus 102 receives a POST request, with reference to FIG. 13.

FIG. 13 is a diagram showing one example of a communication sequence in which file transfer is cancelled prior to start of transmitting file data, due to reasons of the sink apparatus 102, in the file transfer system according to the embodiment.

Like the communication sequence of FIG. 5, the source apparatus 101 and the sink apparatus 102 perform communication of CDS:CreateObject request and response. After that, the source apparatus 101 sends a POST request to the sink apparatus 102 (S503). The above operations are the same as FIG. 5.

Here, it is assumed that the file transfer needs to be cancelled, since, for example, the sink apparatus 102 lost the object created according to the CDS:CreateObject request from the source apparatus 101.

In such a situation, in response to the POST request, the sink apparatus 102 sends a "404 Not Found" status to the source apparatus 101 (S1304). According to the "404 Not Found", the source apparatus 101 cancels processing related to the file transfer.

Thus, in the case where the file transfer is cancelled during a period: after notifying a file size and the like by the POST request from the source apparatus 101 to the sink apparatus 102; and before starting transmission of the file data, due to reasons of the sink apparatus 102, the source apparatus 101 cancels processing related to the file transfer, according to the notification of the sink apparatus 102. As a result, the source apparatus 101 does not need to continue unnecessary processing.

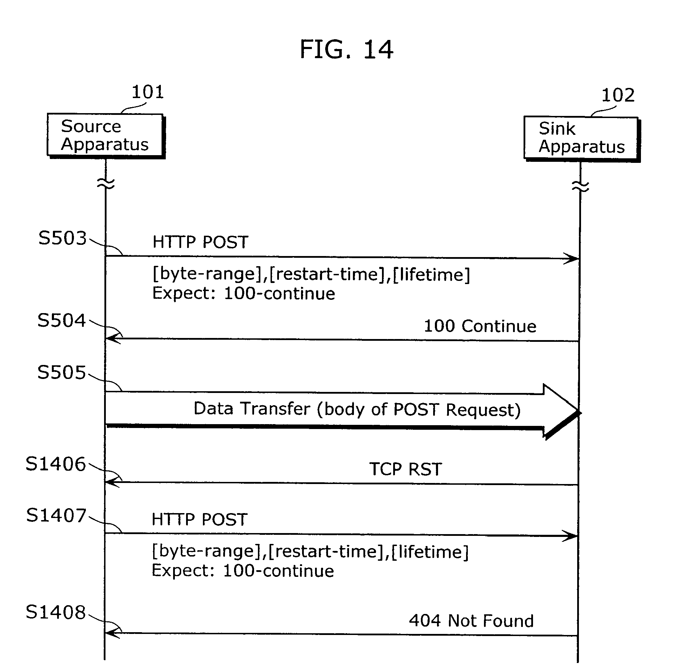

The following describes operations performed by the respective apparatuses in the case where file transfer is cancelled in the middle of transmitting file data from the source apparatus 101 to the sink apparatus 102, due to reasons of the sink apparatus 102, with reference to FIG. 14.

FIG. 14 is a diagram showing one example of a communication sequence in which file transfer is cancelled in the middle of the transmitting file data, due to reasons of the sink apparatus, in the file transfer system according to the embodiment.

Like the communication sequence of FIG. 5, the source apparatus 101 and the sink apparatus 102 perform communication of CDS:CreateObject request and response. After that, the source apparatus 101 sends a POST request to the sink apparatus 102 (S503). In response to the POST request, the sink apparatus 102 sends a "100 Continue" status to the source apparatus 101 (S504). The source apparatus 101 starts transmitting of file data to the sink apparatus 102 (S505). The sink apparatus 102 receives the file data and accumulates the file data into the file accumulation unit 804. The above operations are the same as shown in the communication sequence of FIG. 5.

Here, on the sink apparatus 102 side, a cause of canceling of the file transfer occurs, so that a RST packet of the TCP is sent (S1406). Thereby, the TCP connection used in the file transfer is disconnected. When the disconnection of the TCP connection is detected, the source apparatus 101 sends a POST request again to the sink apparatus 102 (S1407). In response to the POST request, the sink apparatus sends a "404 Not Found" status to the source apparatus 101 (S1408). According to the "404 Not Found", the source apparatus 101 cancels processing related to the file transfer.

Thus, in the case where the file transfer is cancelled after starting transmission of the file data from the source apparatus 101 to the sink apparatus 102, due to reasons of the sink apparatus 102, the source apparatus 101 cancels processing related to the file transfer, according to the notification of the sink apparatus 102. As a result, the source apparatus 101 does not need to continue unnecessary processing.

Thus, when the file transfer is cancelled, the source apparatus 101 and the sink apparatus 102 according to the embodiment of the present invention perform processing to cancel the file transfer in order to prevent unnecessary resources consumption and unnecessary processing, regardless of which apparatus causes the canceling.

It should be noted that, in the above-described embodiment, the HTTP POST method is used in the file transfer as a file transfer protocol for executing push-type flow control. However, the file transfer protocol may be any other methods rather than the POST method. For example, a PUT method may be also used without losing the above advantages.

Furthermore, it has been described that, as parameters referred by the sink apparatus 102 in the case of stopping of the file transfer, the source apparatus 101 sends parameters shown in FIG. 6 in addition to the POST request.

As a practical method of assigning the parameters, there is a method by which a header is originally defined to be included in the POST request as a message header.

For example, UploadTransportInfo.dlna.org: [byte-range], which is an originally-defined header, is assigned to a POST request. A range and a total size of data included in an entity body of HTTP are stored in the header. In addition, necessary information such as [lifetime] is also stored in the header. From the message header of the POST request sent from the source apparatus 101, the sink apparatus 102 can obtain the above information.

It should be noted that the above embodiment has described the structure in which the POST request is added with the three parameters of [byte-range], [restart-time], and [lifetime], in order to be sent. However, only parameter [restart-time] may be added.

It should be also noted that headers other than the UploadTransportInfo.dlna.org, which are, of course, used in the HTTP, are not related to the characteristics of the present invention, so that those headers are not shown in the drawings nor described herein.

It should be noted that the above embodiment has described that the source apparatus 101 transfers a file as one data to the sink apparatus 102. However, it is also possible that the source apparatus 101 divides the file into divided parts which are sent to the sink apparatus 102 separately for each of the divided units. It is advantageous to transfer file data in units of the divided parts from the source apparatus 101, if, for example, there is restriction on a data size for one POST request to be received by the sink apparatus 102.

FIG. 15 is a diagram showing a communication sequence of the file transfer system in which the source apparatus 101 divides a file to be transferred to the sink apparatus 102. Referring to FIG. 15, operations performed by the respective apparatuses when the source apparatus 101 divides a file to be transferred. Here, it is assumed that the source apparatus 101 uses the above-described originally-defined UploadTransportInfo.dlna.org header in order to notify the sink apparatus 102 of a range of the file data that will be transmitted.

Prior to the file transfer, the source apparatus 101 sends a CDS:CreateObject request to the sink apparatus 102 (S1503). According to the CDS:CreateObject request, the sink apparatus 102 creates an object and sends a CDS:CreateObject response to the source apparatus 101 (S1504).

The source apparatus 101 decides a size of each of parts divided from the file to be transferred. The size, which is divided to be transferred, is able to be arbitrary decided, in consideration of transfer stopping, restarting frequencies, an unnecessary transfer size in stopping, overhead due to the dividing, and the like. Here, the file of 1000 bytes are divided into: file data from the first 0th byte to the 499th byte; and file data from the following 500th byte to the 999th byte (S1505). This file dividing is performed by the file transmission control unit 702 of the source apparatus.

The source apparatus 101 starts the file transfer. More specifically, the source apparatus 101 sends a POST request (S1506). The POST request includes the originally-defined UploadTransportInfo.dlna .org header, [byte-range], and [lifetime]. The [byte-range] is herein information representing a range of data included in an entity body of the HTTP, and a total size of the file. The entity of body follows the header. The [byte-range] designates the data range as "0-499" and the total size as "1000". The [lifetime] designates a holding time period of the content. In this case, the [lifetime] designates the period as "1800" by seconds, in other words, 30 minutes.

In response to the above POST request, the sink apparatus 102 sends "100 Continue" to the source apparatus 101 (S1507).

The source apparatus 101 transmits the file data whose data range has been notified to the sink apparatus 102 (S1508). More specifically, the file data is transmitted being stored in the entity body of the POST request. A range of the file included in the entity body is only 500 bytes of "0-499" as described above.

When the file data of 500 bytes is received, the sink apparatus 102 starts to store the received data into the file accumulation unit 804. After starting the storing, if the storing is not completed within about 20 minutes due to, for example, a slow speed to write into the file accumulation unit 804, then "102 Processing" is sent (S1509). After that, the received file data has been stored (S1510), "201 Created" is sent to the source apparatus 101 (S1511) in order to notify that the transferred data has been stored.

Next, between the source apparatus 101 and the sink apparatus 102, the file data of a next divided part from the 500th byte to the 999th byte is transferred (S1512 to S1517), using the same operation sequence: from the transmitting of the POST request from the above the source apparatus 101 to the sink apparatus 102 (S1506); to the notifying of the storing completion from the sink apparatus 102 to the source apparatus 101 (S1511).

In other words, the source apparatus 101 stores "500-999/1000" in [byte-range] of the UploadTransportInfo.dlna.org header, in order to notify to the sink apparatus 102. by interpreting the information, the sink apparatus 102 appends the filed data which will be sequentially received (S1515) to the file data from the 0th byte to the 499th byte which has been already stored, in order to be stored into the file accumulation unit 804.

As described above, it is possible to divide the file to be transmitted, even in the push-type flow control in which the file is transmitted using the POST method.

Here, even in the case where a file is divided to be transferred as described above, if the file transfer is stopped temporarily, the source apparatus 101, as shown in the communication sequence of FIG. 10, transmits the remaining file data to be transmitted by inquiring a size of data stored in the sink apparatus 102. For example, it is assumed that, in the communication sequence of FIG. 15, the file transfer is stopped in the middle of transmitting the first 500 bytes, and the sink apparatus 102 can store 200 bytes. In this situation, the source apparatus 101 inquires the sink apparatus 102 to obtain information indicating that the stored-data size is "200". After that, the source apparatus 101 transmits the remaining 300 bytes to the sink apparatus 102.

In the meanwhile, if the stored-data size is not able to be obtained due to errors on the communication path or the like, the file data, which has been being transmitted, is transmitted again. For example, if in the communication sequence of FIG. 15 the source apparatus 101 cannot obtain the stored-size data from the sink apparatus 102 because the file data is stopped in the middle of transmission of the remaining 500 bytes, the remaining 500 bytes are transmitted from the beginning.

That is, since it is confirmed by the "201 Created" of the sink apparatus 102 that the first 500 bytes are already stored in the sink apparatus 102, what the source apparatus 101 needs to transmit is only the remaining 500 bytes

As described above, the method of dividing a target file to be transferred is advantageous for efficiency of the file transfer, as well as for the situation where there is restriction on the data size for one POST request to be received by the sink apparatus 102 as described above.

Further, prior to the transmitting of the divided file data to the sink apparatus 102, a total size of the file is notified by a POST request to the sink apparatus 102. Therefore, the sink apparatus 102 can determine whether the received file data is a part of a certain file, or entire data of the file.

For example, if [byte-rage] notified prior to the file data transmission is "0-499/1000", it is possible to determine that file data received after the notification is partial file data which is a part of a certain file. On the other hand, if it is notified that [byte-range] is "0-999/1000", it is possible to determine that file data received after the notifying is entire file data which is all data of a certain file.

Thereby, if the remaining file data is not received after receiving and storing file data whose [byte-range] is designated as "0-499/1000", it is determine that the store file data is file data which is not complete. Therefore, it is possible to perform processing of deleting the stored file data after a predetermined time period, confirming the user whether the storing shall be kept, or other processing.

Regarding the received file data, it is also possible to delete the file data when a holding time period represented by [lifetime] designated by the source apparatus 101 is expired, as described above. Therefore, if [lifetime] is not designated, the sink apparatus 102 may delete the file data after the predetermined period according to the determination made based on the above [byte-range]. In addition, the file data may be deleted, if the holding time period represented by [lifetime] is expired and at the same time it is possible to determine from the information indicated by [byte-range] that the file data is not complete data.

It should be noted that a name of the header by which these [byte-range], [lifetime] and the like are notified to the sink apparatus 102 may be any other header names other than the UploadTransportInfo.dlna.org. It should be also noted that, in the embodiment, ".dlna.org" is used as a suffix according a header naming technique defied by Digital Living Network Alliance (DLNA), in order to prevent coincidence where the header has the same name as other arbitrary header name. However, it is also possible to define the header as "X-UploadTransportInfo" or the like, using a prefix indicating that the header is an HTTP header extended originally, as one example.

It should be also noted that, in the communication sequence of FIG. 15, the file of 1000 bytes is divided into two parts each of which is 500 bytes, but of course the dividing units are not limited to this and it is possible to arbitrarily divide a file into any other divided units.

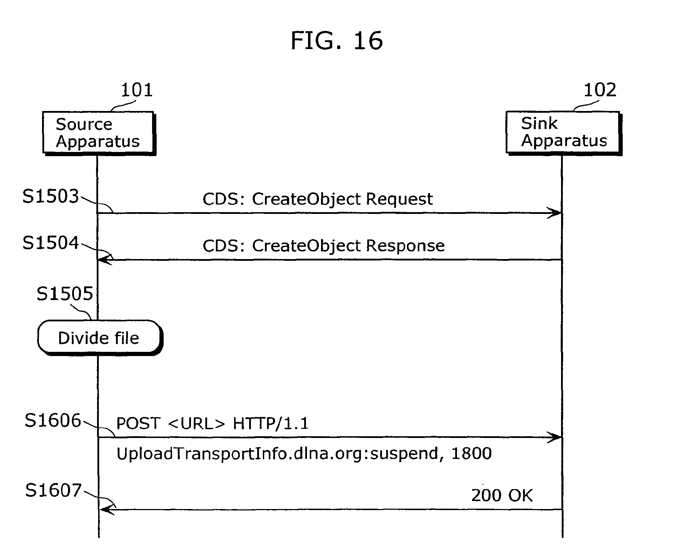

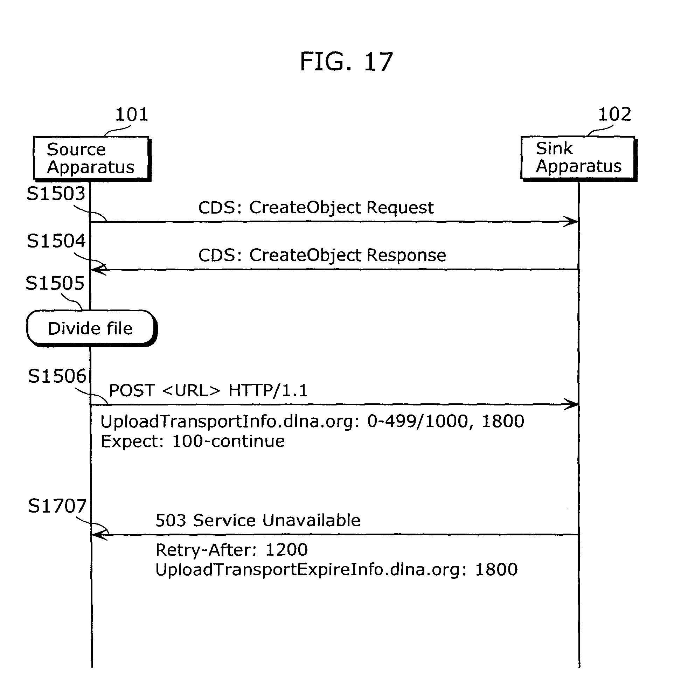

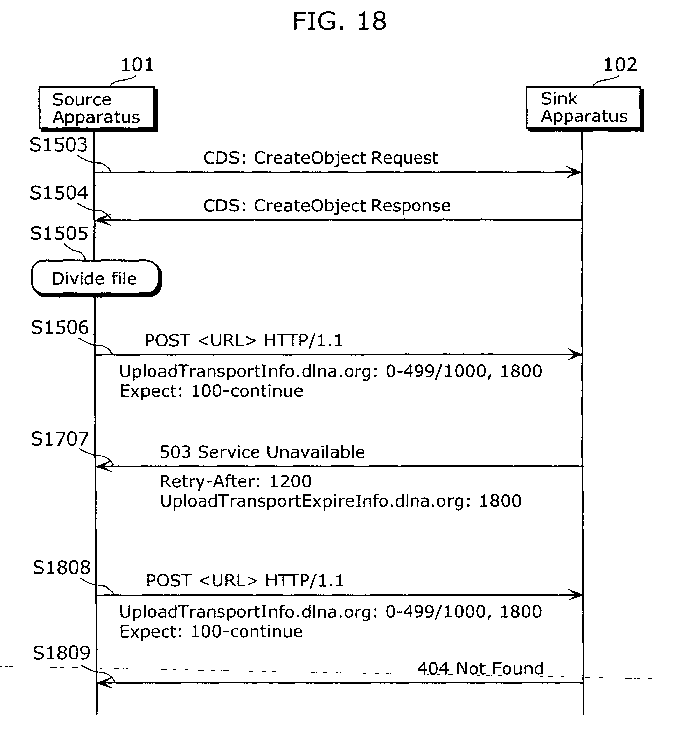

It should be also noted that, in the file transfer system in which a file is divided to be transferred from the source apparatus 101 to the sink apparatus 102, there are cases where the file transfer is stopped temporarily or cancelled due to reasons of the source apparatus 101 or the sink apparatus 102. Therefore, the following describes communication sequences and operations performed by the respective apparatuses, in the case where file transfer is temporarily stopped prior to transmission of file data which is a part divided from one file data, with reference to FIGS. 16 and 17. In addition, communication sequence and operations performed by the respective apparatuses, in the case where file transfer is cancelled, with reference to FIG. 18.

FIG. 16 is a diagram showing a communication sequence in the case where file transfer is temporarily stopped prior to transmission of one of the divided file data, due to reasons of the source apparatus 101, in the file transfer system in which a file is divided to be transferred.

In the communication sequence of FIG. 16, the operations from the transmitting of the CDS:CreateObject request (S1503) to the dividing of the file to be transferred (S1505) are the same as described with reference to FIG. 15, so that the operations are not described again below.

Here, it is assumed that the source apparatus 101 temporarily stops the file transfer, according to instructions from the user to cancel, or the like. In this situation, the source apparatus 101 stores a UploadTransportInfo.dlna.org header including [suspend] indicating suspension of the processing, into a message header of a POST request, and sends the information to the sink apparatus 102 (S1606).

Using a field value of a keyword [suspend] included in this UploadTransportInfo.dlna.org: header, the source apparatus 101 can clearly notify the sink apparatus 102 of the stopping. Here, in this case, an entity body of the POST request is not transmitted. Like the communication sequence of FIG. 15, [lifetime] is included in the header. For example, the [lifetime] designates "1800" by seconds, in other words, 30 minutes.

The sink apparatus 102 sends "200 OK" (S1607) indicating that the stopping is notified.

As compared to the case where the stopping occurs merely by the TCP disconnection, the above procedures can perform appropriate processing, such as sleeping operations unnecessary in the sink apparatus 102, which causes advantages that unnecessary processing is able to be prevented.

It should be noted that restarting of the transfer is able to be performed by the source apparatus 101 arbitrarily within 30 minutes designated by the [lifetime] of the UploadTransportInfo.dlna.org: header. Here, if the source apparatus 101 cannot restart the transfer within 30 minutes, it is also possible to further extend the transfer restart time period, by sending again the UploadTransportInfo.dlna.org :suspend.

The following describes operations performed by the respective apparatuses, in the case where file transfer is temporarily stopped due to the reasons of the sink apparatus 102 when the sink apparatus 102 receives a POST request, in the file transfer system in which a file is divided to be transferred, with reference to FIG. 17.

FIG. 17 is a diagram showing a communication sequence in which file transfer is temporarily stopped when the sink apparatus 102 receives a POST request, due to reasons of the sink apparatus 102, in the file transfer system in which the file is divided to be transferred.

In the communication sequence of FIG. 17, the operations from the transmitting of the CDS:CreateObject request (S1503) to the notifying by a POST request a range and the like of the file data to be transmitted (S1506) are the same as described with reference to FIG. 15, so that the operations are not described again below.

Here, it is assumed that the file transfer is not able to be performed due to reasons, for example, that the sink apparatus 102 receiving the above POST request (S1506) is currently reading data from the file accumulation unit 804.

In this situation, in response to the POST request, the sink apparatus 102 sends "503 Service Unavailable" to the source apparatus 101 (S1707), and notifies the source apparatus 101 of that the file transfer is not able to be performed.

In addition, the sink apparatus 102 notifies an anticipated time period after which the transfer would be able to be started, by storing a Retry-After: header into a response message including "503 Service Unavailable". In short, the Retry-After: header is information indicating a start timing at which file transfer restarts. Furthermore, by storing the originally-defined UploadTransportExpireInfo.dlna.orga: header a period during which the restarting is possible is notified.

The UploadTransportExpireInfo.dlna.orga: header is a header indicating an end timing until which the file transfer is acceptable. In the communication sequence of FIG. 17, the time period is designated as "1800" by seconds, in other words, 30 minutes. In this case, the information indicates that file transfer is acceptable for 30 minutes from when the above response message is sent by the sink apparatus 102 (S1707). In more detail, after expiring the 30 minutes, the object created according to the CDS:CreateObject request from the source apparatus 101 (S1503) is deleted. Moreover, if the file transfer is temporarily stopped after receiving and storing partial file data, the uncompleted file data is stored in the file accumulation unit 804, so that the file data is deleted.

Here, in general, the Retry-After: header defined by RFC2616 is not for ensuring restarting of services, but for notifying of that it is a low possibility of the restarting of services even if an attempt of the restarting is executed after a time period shorter than the time period represented by the Retry-After: header, thereby reducing polling loads on the partner apparatus.

Therefore, the source apparatus 101 attempts to restart the file transfer to the sink apparatus 102 within a time period that is after 20 minutes represented by the Retry-After header and within 30 minutes represented by the UploadTransportExpireInfo.dlna.org: header, thereby confirming a possibility of the restart of the file transfer. If the file transfer is possible, then the following file data is transmitted.

As described above, when the sink apparatus 102 stops the file transfer due to reasons of the sink apparatus 102, the source apparatus 101 is notified, by the Retry-After: header and the UploadTransportExpireInfo.dlna .org: header, of the beginning-timing time period and the ending-timing time period which are regarding when the source apparatus 101 should attempt to restart the file transfer.

Thereby, the source apparatus 101 does not need unnecessary attempts. As a result, it is possible to prevent unnecessary use of resources in the source apparatus 101 and on the communication path.

The following describes a communication sequence and operations performed by the respective apparatuses, in which file transfer is temporarily stopped due to reasons of the sink apparatus 102, as one example of the file transfer stopping, in the file transfer system in which the file is divided to be transferred.

FIG. 18 is a diagram showing a communication sequence in which file transfer is temporarily stopped due to reasons of the sink apparatus 102, in the file transfer system in which the file is divided to be transferred.

In the communication sequence of FIG. 18, the operations from the transmitting of the CDS:CreateObject request (S1503) by the source apparatus 101 to the notifying the status where the file transfer is impossible of the source apparatus 101 (S1707) are the same as described with reference to FIG. 15 and 17, so that the operations are not described again below.

In the communication sequence of FIG. 18, the sink apparatus 102 performs notifying for stopping the file transfer (S1707). Here, it is assumed that the sink apparatus 102 has reasons not to restart the file transfer but to cancel the file transfer, when the source apparatus 101 attempts the file transfer (S1808).

An example of this situation is that an available capacity of the file accumulation unit 804 is run out, so that at the moment there is no possibility of the transfer restarting, or such transfer will cause troubles in the operations of the sink apparatus 102, for instance.

In such cases, the sink apparatus 102 sends "404 Not Found" in response (S1809) in order to notify that URI resources of the destination, which is the object in which the file data to be transmitted will be stored, are deleted and thereby not able to be used. Here, if the source apparatus 101 attempts to restart for the URI deleted from the sink apparatus 102, this results in the same sequence because of difference of timers of the source apparatus 101 and the sink apparatus 102.

It should be also noted that, in the case where the source apparatus 101 cancels file transfer, there are other methods, for example, a method by which the restart attempts for a predetermined URI are not performed until time-out, a method by which an object and a URI related to the object are deleted clearly by the sink apparatus 102 by issuing CDS:DestroyObject of UPnP-AV, and the like.

The above has described using the example where the file transfer is managed in units of objects of UPnP-AV, but the present invention is not limited to the above and applicable also in the case where file transmission is merely performed for a predetermined URI.

As described above, even in the file transfer system in which the file is divided to be transferred, when the file transfer is stopped temporarily or cancelled, the source apparatus 101 or the sink apparatus 102 can notify the partner apparatus of the stopping or the canceling. Thereby, the apparatus, which has been notified of the stopping or the canceling, does not need to continue processing for transferring unnecessary file.

It should be noted that the above has described that the file is transmitted using the POST method of the HTTP, but the present invention is not limited to the above and applicable to a PUT method or any other file transfer protocols other than the HTTP, as far as the protocols conforms to handshake sequences.

It should be also noted that FIGS 16 to 18 show communication sequences in the case where file transfer is stopped temporarily or cancelled, before transmitting even one divided file data. However, operations performed by the respective apparatuses in the case where the file transfer is stopped or cancelled with reference to FIGS. 16 to 18 are not changed even in the case where the file transfer is stopped or cancelled during a period which is after transmitting one or more divided file data and before transmitting next file data.

### Industrial Applicability

The transmitting apparatus, the receiving apparatus, and the file transfer system according to the present invention is useful in a file transfer system in which a file is transferred between arbitrary apparatuses connected with each other via a network. The present invention has advantages especially when a size of the file is large so that it is wasteful to start file transfer again from the beginning after stopping the transfer.

## Claims

1. A file transfer system which performs file transfer to transfer a file from a transmitting apparatus to a receiving apparatus via a network, said transmitting apparatus transmitting the file and said receiving apparatus receiving the file, said file transfer system comprising:
said receiving apparatus including:
a storage unit in which file data included in the file is stored, the file data being received from said transmitting apparatus;
a stored-size obtainment unit operable to obtain a stored size that is a size of the file data stored in said storage unit; and
a receiving control unit operable to inform the stored size obtained by said stored-size obtainment unit to said transmitting apparatus, in response to inquiry of said transmitting apparatus about the stored size, and
said transmitting apparatus including:
a transmission unit operable to transmit the file data to said receiving apparatus;
a detection unit operable to detect stopping of the file transfer;
an inquiry unit operable to inquiry the stored-data size to said receiving apparatus, after the stopping of the file transfer is detected by said detection unit; and
a transmission control unit operable to control said transmission unit to transmit file data remaining in the file, based on the stored-data size notified by said receiving apparatus in response to the inquiry of said inquiry unit.

2. The file transfer system according to Claim 1,
wherein said transmission unit is operable to transmit the file to said receiving apparatus using one of a POST method and a PUT method which are defined by Hyper Text Transfer Protocol (HTTP).

3. The file transfer system according to Claim 1,
wherein said transmission control unit is further operable to notify said receiving apparatus of a data range prior to the transmitting of the file data by said transmission unit, the data range being a range of the file data in the file, and
said receiving apparatus further includes a file control unit operable to combine the file data stored in said storage unit and the file data received after the data range is notified, the combining being performed based on the data range.

4. The file transfer system according to Claim 3,
wherein said transmission control unit is operable to notify said receiving apparatus of a total size of the file as well as the data range.

5. The file transfer system according to Claim 4,
wherein said transmission control unit is further operable to divide the file into pieces of file data, each of which has a predetermined size, and
said transmission unit is operable to transmit the pieces of file data to said receiving apparatus, the pieces of file data being divided by said transmission control unit.

6. The file transfer system according to Claim 1,
wherein said receiving control unit is further operable to transmit a stop request to said transmitting apparatus, the stop request requesting to stop the file transfer, and
the stop request includes start timing information indicating a start timing at which said receiving apparatus restarts the file transfer, and end timing information indicating an end timing until which said receiving apparatus accepts the file transfer,
said detection unit is operable to detect the stopping of the file transfer, by receiving the stop request, and
said transmission control unit is operable to control said transmission unit to transmit the remaining file data from the start timing until the permission time period.

7. The file transfer system according to Claim 1,
wherein said transmission control unit is further operable to notify said receiving apparatus of a holding time period, before said transmission unit transmits the file data, the holding time period being a time period during which said receiving apparatus will hold the file data, and
said receiving control unit is further operable to delete the file data stored in said storage unit, if the file data is stored in said storage unit and all of the file data included in the file has not yet been received from said transmitting apparatus in expiration of the holding time period of the file data.

8. The file transfer system according to Claim 1,
wherein said transmitting apparatus and the receiving apparatus are operable to transfer the file using Transmission Control Protocol (TCP) connection,
said detection unit is operable to detect the stopping of the file transfer, by detecting that said transmission control unit disconnects the TCP connection in the middle of the transmitting of the file data,
said transmission control unit is further operable to notify said receiving apparatus of the holding time period of the file data in said receiving apparatus, after the disconnection of the TCP connection, and
said receiving control unit is further operable to delete the file data stored in said storage unit, when all of file data included in the file has not yet been received in expiration of the holding time period notified from said transmitting apparatus.

9. The file transfer system according to Claim 1,
wherein said transmitting apparatus and said receiving apparatus are operable to transfer the file using Transmission Control Protocol (TCP) connection,
said transmission control unit is operable to transmit, to said receiving apparatus, a transfer request for permission of the file transfer, when the TCP connection is disconnected by said receiving apparatus,
said receiving control unit is further operable to transmit, to said transmitting apparatus, a stop request for stopping of the file transfer, in response to the transfer request, and
said detection unit is operable to detect the stopping of the file transfer, by receiving the stop request.

10. A transmitting apparatus which performs file transfer to transfer a file to a receiving apparatus via a network, said transmitting apparatus comprising:
a transmission unit operable to transmit file data included in the file to the receiving apparatus;
a detection unit operable to detect stopping of the file transfer;
an inquiry unit operable to inquiry a stored-data size to said receiving apparatus, after the stopping of the file transfer is detected by said detection unit, the stored-data size being a size of the file data stored in the receiving apparatus; and
a transmission control unit operable to control said transmission unit to transmit file data remaining in the file, based on the stored-data size notified by the receiving apparatus in response to the inquiry of said inquiry unit.

11. A receiving apparatus which receives a file transmitted from a transmitting apparatus via a network, said receiving apparatus comprising:
a storage unit in which file data included in the file is stored, the file data being received from the transmitting apparatus;
a stored-size obtainment unit operable to obtain a stored size that is a size of the file data stored in said storage unit; and
a receiving control unit operable to inform the stored size obtained by said stored-size obtainment unit to the transmitting apparatus, in response to inquiry of the transmitting apparatus about the stored size.

12. A transmitting method of performing file transfer to transfer a file to a receiving apparatus via a network, said transmitting method comprising steps of:
transmitting file data included in the file to the receiving apparatus;
detecting stopping of the file transfer;
inquiring a stored-data size to the receiving apparatus, after the stopping of the file transfer is detected by the detection unit, the stored-data size being a size of the file data stored in the receiving apparatus; and
controlling to transmit file data remaining in the file, based on the stored-data size notified by the receiving apparatus in response to the inquiry unit.

13. A receiving method of receiving a file transmitted from a transmitting apparatus via a network, said receiving method comprising steps of:
storing file data included in the file into a storage unit, the file data being received from the transmitting apparatus;
obtaining a stored size that is a size of the file data stored in the storage unit; and
informing the stored size obtained by the obtaining unit to the transmitting apparatus, in response to inquiry of the transmitting apparatus about the stored size.

14. A program for performing file transfer to transfer a file to a receiving apparatus via a network, said program causing a computer to execute steps of:
transmitting file data included in the file to the receiving apparatus;
detecting stopping of the file transfer;
inquiring a stored-data size to the receiving apparatus, after the stopping of the file transfer is detected by the detection unit, the stored-data size being a size of the file data stored in the receiving apparatus; and
controlling the transmission unit to transmit file data remaining in the file, based on the stored-data size notified by the receiving apparatus in response to the inquiring unit.

15. A program for receiving a file transmitted from a transmitting apparatus via a network, said program causing a computer to execute steps of:
storing file data included in the file into a storage unit, the file data being received from the transmitting apparatus;
obtaining a stored size that is a size of the file data stored in the storage unit; and
informing the stored size obtained by the obtaining unit to the transmitting apparatus, in response to inquiry of the transmitting apparatus about the stored size.

## Amended claims

### Amended claims under Art. 19.1 PCT

**1.** (Canceled)

**2.** (Canceled)

**3.** (Amended) A file transfer system which performs file transfer to transfer a file from a transmitting apparatus to a receiving apparatus via a network, said transmitting apparatus transmitting the file and said receiving apparatus receiving the file, said file transfer system comprising:
said receiving apparatus including:
a storage unit in which file data included in the file is stored, the file data being received from said transmitting apparatus;
a stored-size obtainment unit operable to obtain a stored size that is a size of the file data stored in said storage unit; and
a receiving control unit operable to inform the stored size obtained by said stored-size obtainment unit to said transmitting apparatus, in response to inquiry of said transmitting apparatus about the stored size, and
said transmitting apparatus including:
a transmission unit operable to transmit the file data to said receiving apparatus;
a detection unit operable to detect stopping of the file transfer;
an inquiry unit operable to inquiry the stored size to said receiving apparatus, after the stopping of the file transfer is detected by said detection unit; and
a transmission control unit operable to control said transmission unit to transmit file data remaining in the file, based on the stored size notified by said receiving apparatus in response to the inquiry of said inquiry unit,
wherein said transmission control unit is further operable to notify said receiving apparatus of a data range prior to the transmitting of the file data by said transmission unit, the data range being a range of the file data in the file, and
said receiving apparatus further includes a file control unit operable to combine the file data stored in said storage unit and the file data received after the data range is notified, the combining being performed based on the data range.

**4.** (Amended) The file transfer system according to Claim 3,
wherein said transmission control unit is operable to notify said receiving apparatus of a total size of the file as well as the data range.

**5.** The file transfer system according to Claim 4,
wherein said transmission control unit is further operable to divide the file into pieces of file data, each of which has a predetermined size, and
said transmission unit is operable to transmit the pieces of file data to said receiving apparatus, the pieces of file data being divided by said transmission control unit.

**6.** (Amended) A file transfer system which performs file transfer to transfer a file from a transmitting apparatus to a receiving apparatus via a network, said transmitting apparatus transmitting the file and said receiving apparatus receiving the file, said file transfer system comprising:
said receiving apparatus including:
a storage unit in which file data included in the file is stored, the file data being received from said transmitting apparatus;
a stored-size obtainment unit operable to obtain a stored size that is a size of the file data stored in said storage unit; and
a receiving control unit operable to inform the stored size obtained by said stored-size obtainment unit to said transmitting apparatus, in response to inquiry of said transmitting apparatus about the stored size, and
said transmitting apparatus including:
a transmission unit operable to transmit the file data to said receiving apparatus;
a detection unit operable to detect stopping of the file transfer;
an inquiry unit operable to inquiry the stored size to said receiving apparatus, after the stopping of the file transfer is detected by said detection unit; and
a transmission control unit operable to control said transmission unit to transmit file data remaining in the file, based on the stored size notified by said receiving apparatus in response to the inquiry of said inquiry unit,
wherein said receiving control unit is further operable to transmit a stop request to said transmitting apparatus, the stop request requesting to stop the file transfer, and
the stop request includes start timing information indicating a start timing at which said receiving apparatus restarts the file transfer, and end timing information indicating an end timing until which said receiving apparatus accepts the file transfer,
said detection unit is operable to detect the stopping of the file transfer, by receiving the stop request, and
said transmission control unit is operable to control said transmission unit to transmit the remaining file data from the start timing to the end timing.

**7.** (Amended) A file transfer system which performs file transfer to transfer a file from a transmitting apparatus to a receiving apparatus via a network, said transmitting apparatus transmitting the file and said receiving apparatus receiving the file, said file transfer system comprising:
said receiving apparatus including:
a storage unit in which file data included in the file is stored, the file data being received from said transmitting apparatus;
a stored-size obtainment unit operable to obtain a stored size that is a size of the file data stored in said storage unit; and
a receiving control unit operable to inform the stored size obtained by said stored-size obtainment unit to said transmitting apparatus, in response to inquiry of said transmitting apparatus about the stored size, and
said transmitting apparatus including:
a transmission unit operable to transmit the file data to said receiving apparatus;
a detection unit operable to detect stopping of the file transfer;
an inquiry unit operable to inquiry the stored size to said receiving apparatus, after the stopping of the file transfer is detected by said detection unit; and
a transmission control unit operable to control said transmission unit to transmit file data remaining in the file, based on the stored size notified by said receiving apparatus in response to the inquiry of said inquiry unit,
wherein said transmission control unit is further operable to notify said receiving apparatus of a holding time period, before said transmission unit transmits the file data, the holding time period being a time period during which said receiving apparatus will hold the file data, and
said receiving control unit is further operable to delete the file data stored in said storage unit, if the file data is stored in said storage unit and all of the file data included in the file has not yet been received from said transmitting apparatus in expiration of the holding time period of the file data.

**8.** (Canceled)

**9.** (Amended) A file transfer system which performs file transfer to transfer a file from a transmitting apparatus to a receiving apparatus via a network, said transmitting apparatus transmitting the file and said receiving apparatus receiving the file, said file transfer system comprising:
said receiving apparatus including:
a storage unit in which file data included in the file is stored, the file data being received from said transmitting apparatus;
a stored-size obtainment unit operable to obtain a stored size that is a size of the file data stored in said storage unit; and
a receiving control unit operable to inform the stored size obtained by said stored-size obtainment unit to said transmitting apparatus, in response to inquiry of said transmitting apparatus about the stored size, and
said transmitting apparatus including:
a transmission unit operable to transmit the file data to said receiving apparatus;
a detection unit operable to detect stopping of the file transfer;
an inquiry unit operable to inquiry the stored size to said receiving apparatus, after the stopping of the file transfers is detected by said detection unit; and
a transmission control unit operable to control said transmission unit to transmit file data remaining in the file, based on the stored size notified by said receiving apparatus in response to the inquiry of said inquiry unit,
wherein said transmitting apparatus and said receiving apparatus are operable to transfer the file using Transmission Control Protocol (TCP) connection,
said transmission control unit is further operable to transmit, to said receiving apparatus, a transfer request for permission of the file transfer, when the TCP connection is disconnected by said receiving apparatus,
said receiving control unit is further operable to transmit, to said transmitting apparatus, a stop request for stopping of the file transfer, in response to the transfer request, and
said detection unit is operable to detect the stopping of the file transfer, by receiving the stop request.

**10.** (Amended) A transmitting apparatus which performs file transfer to transfer a file to a receiving apparatus via a network, said transmitting apparatus comprising:
a transmission unit operable to transmit file data included in the file to the receiving apparatus;
a detection unit operable to detect stopping of the file transfer;
an inquiry unit operable to inquiry a stored size to said receiving apparatus, after the stopping of the file transfer is detected by said detection unit, the stored size being a size of the file data stored in the receiving apparatus; and
a transmission control unit operable to control said transmission unit to transmit file data remaining in the file, based on the stored size notified by the receiving apparatus in response to the inquiry of said inquiry unit,
wherein said transmission control unit is further operable to notify the receiving apparatus of a data range prior to the transmitting of the file data by said transmission unit, the data range being a range of the file data in the file.

**11.** (Amended) A receiving apparatus which receives a file transmitted from a transmitting apparatus via a network, said receiving apparatus comprising:
a storage unit in which file data included in the file is stored, the file data being received from the transmitting apparatus;
a stored-size obtainment unit operable to obtain a stored size that is a size of the file data stored in said storage unit;
a receiving control unit operable to inform the stored size obtained by said stored-size obtainment unit to the transmitting apparatus, in response to inquiry of the transmitting apparatus about the stored size; and
a file control unit operable to receive a data range, which is a range of the file data in the file, from the transmitting apparatus, and to combine the file data stored in said storage unit and the file data received after the data range is notified, the combining being performed based on the data range.

**12.** (Amended) A transmitting method of performing file transfer to transfer a file to a receiving apparatus via a network, said transmitting method comprising steps of:
transmitting file data included in the file to the receiving apparatus;
detecting stopping of the file transfer;
inquiring a stored size to the receiving apparatus, after the stopping of the file transfer is detected in said detecting, the stored size being a size of the file data stored in the receiving apparatus;
controlling to transmit file data remaining in the file to the receiving apparatus, based on the stored size notified by the receiving apparatus in response to said inquiring; and
notifying the receiving apparatus of a data range prior to the transmitting of the file data in said transmitting, the data range being a range of the file data in the file.

**13.** (Amended) A receiving method of receiving a file transmitted from a transmitting apparatus via a network, said receiving method comprising steps of:
storing file data included in the file into a storage unit, the file data being received from the transmitting apparatus;
obtaining a stored size that is a size of the file data stored in the storage unit;
informing the stored size obtained in said obtaining to the transmitting apparatus, in response to inquiry of the transmitting apparatus about the stored size; and
receiving a data range, which is a range of the file data in the file, from the transmitting apparatus, and combining the file data stored in the storage unit and the file data received after the data range is notified, based on the received data range.

**14.** (Amended) A program for performing file transfer to transfer a file to a receiving apparatus via a network, said program causing a computer to execute steps of:
transmitting file data included in the file to the receiving apparatus;
detecting stopping of the file transfer;
inquiring a stored size to the receiving apparatus, after the stopping of the file transfer is detected in said detecting, the stored size being a size of the file data stored in the receiving apparatus;
controlling to transmit file data remaining in the file to the receiving apparatus, based on the stored size notified by the receiving apparatus in response to said inquiring; and
notifying the receiving apparatus of a data range prior to the transmitting of the file data in said transmitting, the data range being a range of the file data in the file.

**15.** (Amended) A program for receiving a file transmitted from a transmitting apparatus via a network, said program causing a computer to execute steps of:
storing file data included in the file into a storage unit, the file data being received from the transmitting apparatus;
obtaining a stored size that is a size of the file data stored in the storage unit;
informing the stored size obtained in said obtaining to the transmitting apparatus, in response to inquiry of the transmitting apparatus about the stored size; and
receiving a data range, which is a range of the file data in the file, from the transmitting apparatus, and combining the file data stored in the storage unit and the file data received after the data range is notified, based on the received data range.
